# EUROPÄISCHE PATENTSCHRIFT

(11) **EP 4 001 896 B1**
(45) Veröffentlichungstag und Bekanntmachung des Hinweises auf die Patenterteilung: **31.12.2025**
(21) Anmeldenummer: 20209610.3
(22) Anmeldetag: 24.11.2020
(51) Int. Cl.: G01N 15/08, G01N 11/02, B01D 61/20, B01D 65/10, B01D 61/22

(54) **BIOPROZESSTECHNISCHES FILTRATIONSVERSUCHSSYSTEM**
BIOTECHNICAL FILTRATION TEST SYSTEM
SYSTÈME TECHNIQUE DE TRAITEMENT BIOLOGIQUE DESTINÉ AUX ESSAIS DE FILTRATION

(43) Veröffentlichungstag der Anmeldung: 25.05.2022
(73) Patentinhaber: Sartorius Stedim Biotech GmbH, 37079 Göttingen (DE)
(72) Erfinder: Obermann, Stefan, 37079 Goettingen (DE); Grösche, Dennis, 37079 Goettingen (DE); Walter, Fabian, 37079 Goettingen (DE); Lock, Christian, 37079 Goettingen (DE); Rosenberg, Hendrik, 37079 Goettingen (DE); Lohrberg, Martin, 37079 Goettingen (DE); Ritzka, Roman, 37079 Goettingen (DE)
(74) Vertreter: Novagraaf International SA

(56) Entgegenhaltungen:
- DE-A1- 102014 012 784
- US-A1- 2012 178 097
- US-A1- 2020 353 414

## Beschreibung

Die Erfindung betrifft eine Anordnung gemäß dem Oberbegriff von Anspruch 1 sowie ein Verfahren gemäß dem Oberbegriff von Anspruch 18.

Unter einem bioprozesstechnischen Filtrationsversuchssystem wird im Allgemeinen ein System verstanden, mit dem im kleinen Maßstab Filtrationsversuche mit einem flüssigen, beispielsweise biologischen, insbesondere biopharmazeutischen, Testmedium durchgeführt werden. Hier sind verschiedene Zielsetzungen denkbar. Ein Filtrationsversuchssystem kann ganz allgemein zur Erfassung des Durchflusses als Funktion des Druckes, zur Messung des Verhaltens bei verschiedenen Benetzungsmedien als Vorbehandlung, zur Standzeitbestimmung (Dauer bis zum Verblocken) oder dergleichen dienen. Auch kann ein Filtrationsversuchssystem verwendet werden, um geeignete Filter für eine Filtration im größeren Maßstab, beispielsweise für eine industrielle Produktion von Biopharmazeutika, zu finden. Beispielsweise werden im Rahmen eines Filtrationsversuchs Versuchsdaten, nämlich Sensordaten von beispielsweise Drucksensoren, zu mindestens einem Filter oder mindestens einer Kombination aus Filter und Benetzungsmedium ermittelt, auf deren Basis der Filter und/oder das Benetzungsmedium eines Zielsystems nach vorbestimmten Skalierungskriterien auswählbar und/oder dimensionierbar ist. Insbesondere kann mit einem solchen Filtrationsversuchssystem die für einen bestimmten Filtrationsprozess optimale Filtergröße bzw. Filteroberfläche, gegebenenfalls mit einem dafür optimalen Benetzungsmedium, ausgewählt werden.

Bei einem entsprechenden Filtrationsversuch wird eine vorgegebene Menge des Testmediums mit einem Filter einer vorgegebenen Größe, gegebenenfalls unter Anwendung eines bestimmten Benetzungsmediums, gefiltert, wobei Druck und Volumenstrom des Testmediums, wenn es die Filtrationsversuchsstrecke durchläuft, sensorisch erfasst und dokumentiert werden. Dabei wird beispielsweise jeweils eine Größe, beispielsweise der Druck, konstant gehalten und die jeweils andere Größe, beispielsweise der Volumenstrom, gemessen.

Bei den bekannten Filtrationsversuchssystemen muss der Benutzer grundsätzlich eine Vielzahl von Komponenten, insbesondere von Sensoren und Filtern, mechanisch und fluidtechnisch miteinander verbinden. Die Sensoren müssen zudem mit einem entsprechenden Datenempfangsinstrument elektrisch verbunden werden. Weiterhin muss ein Antrieb für das flüssige Testmedium, beispielsweise eine Pumpe oder eine Versorgungsleitung zur Bereitstellung von Druckluft, insbesondere zusammen mit einem pneumatischen Druckregler, fluidtechnisch und gegebenenfalls elektrisch angeschlossen werden. Gegebenenfalls kann auch noch ein Antrieb für Luft zum Entleeren der Fluidleitungen des Filtrationsversuchssystems, beispielsweise eine Pumpe oder eine Versorgungsleitung zur Bereitstellung von Druckluft, insbesondere auch mit einem pneumatischen Druckregler, vorgesehen sein, wobei hier ebenfalls ein fluidtechnischer und gegebenenfalls elektrischer Anschluss vorzunehmen ist. Der Begriff "Pumpe" ist vorliegend weit zu verstehen und umfasst nicht nur Maschinen zum Fördern von Flüssigkeiten (Hydraulikpumpen, z.B. Schlauchpumpen), sondern auch von Gasen (Pneumatikpumpen, z.B. Kompressoren). Weiterer Stand der Technik findet sich beispielsweise in US 2012/0178097 A1, DE 10 2014 012 784 A1 und US 2020/0353414 A1.

Die einzelnen mechanischen, elektrischen und fluidtechnischen Verbindungen werden dabei für jeden Filtrationsversuch von Hand hergestellt.

Der Erfindung liegt das Problem zugrunde, das bekannte bioprozesstechnische Filtrationsversuchssystem derart auszugestalten und weiterzubilden, dass dessen Handhabung vereinfacht wird.

Das obige Problem wird bei einem bioprozesstechnischen, insbesondere biopharmazeutischen, Filtrationsversuchssystem gemäß dem Oberbegriff von Anspruch 1 durch die Merkmale des kennzeichnenden Teils von Anspruch 1 gelöst.

Wesentlich ist die grundsätzliche Überlegung, durch eine Vorkonfektionierung zumindest einzelner Bestandteile des Filtrationsversuchssystems die Anzahl der vom Benutzer durchzuführenden Arbeitsschritte bei der Planung und dem Aufbau des Systems zu verringern. Dies kann durch eine programmier- und/oder schaltungstechnische Vorkonfektionierung erfolgen, also eine Vorkonfektionierung von für einen konkreten Filtrationsversuch notwendiger Software und/oder einer dafür notwendigen elektrischen Schaltung, insbesondere integrierten Schaltung. Zusätzlich oder alternativ kann auch eine fluidtechnische Vorkonfektionierung vorgesehen sein, also eine Vorkonfektionierung von vom Testmedium durchströmbaren Bauteilen wie Filtern, Ventilen und/oder Leitungsabschnitten. Zusätzlich oder alternativ kann auch eine sensortechnische Vorkonfektionierung vorgesehen sein, also eine die Sensoren des Filtrationsversuchssystems betreffende Vorkonfektionierung.

Mit einer Vorkonfektionierung ist gemeint, dass mehrere der zuvor genannten Bauteile wie Filter, Ventile, Sensoren, Fluidleitungen oder dergleichen bereits versuchsspezifisch, das heißt für einen konkreten Filtrationsversuch passend, ausgewählt und, insbesondere herstellerseitig, zu einer Einheit vormontiert sind. Eine solche vormontierte Einheit wird im Weiteren auch als Montagemodul bezeichnet. Betreffend die Software und/oder elektrische Schaltung ist mit einer Vorkonfektionierung gemeint, dass die Software bzw. elektrische Schaltung für einen konkreten Filtrationsversuch versuchsspezifisch bereitgestellt ist. Auf diese Weise werden die Planung und der Aufbau des Filtrationsversuchssystems erheblich vereinfacht.

Im Einzelnen wird vorgeschlagen, dass das Filtrationsversuchssystem zumindest teilweise programmier- und/oder schaltungstechnisch vorkonfektioniert ist.

Anspruch 2 definiert besonders bevorzugte Komponenten und Bauteile des Filtrationsversuchssystems und insbesondere der Filtrationsversuchsstrecke. Die Filtrationsversuchsstrecke ist vorliegend definiert als der von dem Testmedium durchströmte Abschnitt des Filtrationsversuchssystems beginnend mit dem Vorlagebehälter bis zum Auslass. Besonders bevorzugte Komponenten sind insbesondere eine Ventilanordnung, eine Sensoranordnung, eine Filteranordnung, ein Fluidleitungsnetzwerk, ein Datenempfangsinstrument und/oder eine Wägeanordnung. Besonders bevorzugte Bauteile sind entsprechend Ventile, Sensoren, Filter und Leitungsabschnitte.

Die besonders bevorzugten Ausgestaltungen gemäß den Ansprüchen 3 bis 6 betreffen die Vorkonfektionierung mindestens eines Datenempfangsinstruments. Ein Datenempfangsinstrument ist ein Gerät, das zumindest zum Empfang von Sensordaten der Sensoranordnung eingerichtet ist. Dies sind beispielsweise Daten von einem oder mehreren Drucksensoren, Volumenstromsensoren, Leitfähigkeitssensoren, optischen Sensoren, z.B. Trübungssensoren, UV-Sensoren, Infrarot- und/oder Raman-Sensoren, Temperatursensoren etc. Das Datenempfangsinstrument kann auch zur Verarbeitung der Sensordaten und/oder, als Steuergerät, zur Steuerung einer Pumpe und/oder eines pneumatischen Druckreglers des Filtrationsversuchssystems oder eines oder mehrerer Ventile der Ventilanordnung eingerichtet sein. Eine entsprechende Steuerung wird insbesondere basierend auf Steuerungsdaten durchgeführt, die, zumindest teilweise, durch die Verarbeitung der Sensordaten erzeugt werden. Die jeweilige Steuerung erfolgt dann also basierend auf den Sensordaten. Betreffend den besagten Empfang von Sensordaten, die Verarbeitung der Sensordaten und/oder die Steuerung der Pumpe und/oder des pneumatischen Druckreglers und/oder des jeweiligen Ventils ist das jeweilige Datenempfangsinstrument insbesondere programmier- und/oder schaltungstechnisch vorkonfektioniert. Die jeweilige Software und/oder elektrische Schaltung des Datenempfangsinstruments ist also auf einen konkreten Filtrationsversuchstyp (z.B. "constant pressure" oder "constant flow") oder gar Filtrationsversuch abgestimmt bzw. für einen konkreten Filtrationsversuch vorbereitet.

Es sei nochmals hervorgehoben, dass hier und im Weiteren der Begriff "Pumpe" weit zu verstehen ist und nicht nur Maschinen zum Fördern von Flüssigkeiten, im Weiteren "Hydraulikpumpen" genannt (z.B. Schlauchpumpen), sondern auch von Gasen, im Weiteren "Pneumatikpumpen" genannt (z.B. Kompressoren) umfasst. So kann eine Pumpe bei dem vorschlagsgemäßen Filtrationsversuchssystem als Antrieb für das flüssige Testmedium und/oder als Antrieb für Luft, beispielsweise zum Entleeren der Fluidleitungen des vorschlagsgemäßen Filtrationsversuchssystems, vorgesehen sein. Der Antrieb für das flüssige Testmedium und/oder der Antrieb für Luft kann aber auch eine externe Druckluftquelle sein, insbesondere ein externes Druckluftnetzwerk, eine externe Druckluftflasche oder dergleichen, gegebenenfalls unter fluidtechnischer Zwischenschaltung eines pneumatischen Druckreglers zum Regeln der externen Druckluftquelle.

Anspruch 7 definiert bevorzugte Vorkonfektionierungen des Filtrationsversuchssystems.

So betrifft eine besonders bevorzugte Ausgestaltung die Vorkonfektionierung des Filtrationsversuchssystems, indem das Messprinzip, die Spezifikationen und/oder die Einbaulage mindestens eines Sensors auf einen konkreten Filtrationsversuch abgestimmt bzw. für einen konkreten Filtrationsversuch vorbereitet ist/sind. Eine solche Vorkonfektionierung ist eine sensortechnische Vorkonfektionierung.

Eine weitere besonders bevorzugte Ausgestaltung betrifft die Vorkonfektionierung des Filtrationsversuchssystems, indem das Funktionsprinzip, die Spezifikationen und/oder die Einbaulage mindestens eines Filters auf einen konkreten Filtrationsversuch abgestimmt bzw. für einen konkreten Filtrationsversuch vorbereitet ist/sind. Eine solche Vorkonfektionierung ist eine fluidtechnische Vorkonfektionierung.

Noch eine weitere besonders bevorzugte Ausgestaltung betrifft die Vorkonfektionierung des Filtrationsversuchssystems, indem die Betätigungsart, die Spezifikationen und/oder die Einbaulage mindestens eines Ventils auf einen konkreten Filtrationsversuch abgestimmt bzw. für einen konkreten Filtrationsversuch vorbereitet ist/sind. Eine solche Vorkonfektionierung ist ebenfalls eine fluidtechnische Vorkonfektionierung.

Noch eine weitere besonders bevorzugte Ausgestaltung betrifft die Vorkonfektionierung des Filtrationsversuchssystems, indem die Spezifikationen und/oder die Einbaulage mindestens eines Leitungsabschnitts auf einen konkreten Filtrationsversuch abgestimmt bzw. für einen konkreten Filtrationsversuch vorbereitet ist/sind. Eine solche Vorkonfektionierung ist ebenfalls eine fluidtechnische Vorkonfektionierung.

Nach den besonders bevorzugten Ausgestaltungen gemäß den Ansprüchen 8 bis 13 erfolgt eine fluidtechnische und/oder sensortechnische Vorkonfektionierung durch ein oder mehrere Montagemodule, also vormontierte Einheiten von Bauteilen des Filtrationsversuchssystems, insbesondere der Filtrationsversuchsstrecke. Die Verwendung solcher Montagemodule vereinfacht die Montage und damit die Inbetriebnahme, aber auch die Demontage, beispielsweise zum Transport. Das jeweilige Montagemodul weist zumindest einen oder mehrere Leitungsabschnitte des Fluidleitungsnetzwerks sowie zumindest ein weiteres der Bauteile "Sensor", "Filter" und "Ventil" auf. Es ist auch ein Montagemodul denkbar, das zusätzlich zu einem der Bauteile "Sensor", "Filter", "Ventil" und "Leitungsabschnitt" einen Vorlagebehälter aufweist. Die Auswahl der Bauteile, die zu dem Montagemodul vormontiert sind, ist dann auf einen konkreten Filtrationsversuch abgestimmt. Dabei ist es denkbar, dass bereits ein einzelnes Montagemodul die Filtrationsversuchsstrecke bildet. Es ist aber auch denkbar, dass das einzelne Montagemodul noch mit einem weiteren der Bauteile "Sensor", "Filter", "Ventil" und "Leitungsabschnitt" und vorzugsweise mit einem weiteren wie zuvor definierten Montagemodul zusammengesetzt wird, um dann zusammen die Filtrationsversuchsstrecke zu bilden.

Ein Montagemodul kann bereits dadurch gebildet sein, dass eines der Bauteile "Sensor", "Filter", "Ventil" und "Vorlagebehälter" mit einem Leitungsabschnitt des Fluidleitungsnetzwerks bestimmungsgemäß verbunden ist. "Bestimmungsgemäß" meint hier und im Folgenden eine Verbindung, die dem vorgesehenen Anwendungszweck entsprechend fertiggestellt ist. Besonders bevorzugt umfasst ein solches Montagemodul zusätzlich zu dem besagten Leitungsabschnitt mindestens zwei der Bauteile "Sensor", "Filter", "Ventil" und "Vorlagebehälter", so dass beispielsweise ein Vorlagebehälter und ein Sensor und/oder zwei Sensoren jeweils über einen Leitungsabschnitt bestimmungsgemäß miteinander verbunden sind.

Dabei ist es gemäß einer Variante so, dass die jeweils miteinander bestimmungsgemäß verbundenen Bauteile allein durch einen Leitungsabschnitt zueinander fixiert sind, also ohne Verwendung einer separaten Tragstruktur, an der das jeweilige Bauteil befestigt ist. In diesem Fall handelt es sich bei dem jeweiligen Montagemodul vorzugsweise um eine Single-Use-Komponente, also eine Einwegkomponente. Bei entsprechendem Austausch der Single-Use-Komponenten entfällt die Notwendigkeit einer Reinigung der Bauteile und es besteht kein Risiko von Verunreinigungen in zwei aufeinanderfolgenden Filtrationsversuchen mit unterschiedlichen Testmedien.

Es ist gemäß einer weiteren Variante aber auch denkbar, mehrere der Bauteile "Sensor", "Filter", "Ventil" und "Leitungsabschnitt" eines Montagemoduls über eine gemeinsame Tragstruktur in Form eines Gehäuses, insbesondere Kunststoff-, Harz-, Glas-, Keramik- und/oder Metallgehäuses, zueinander zu fixieren (Anspruch 9). Auch in diesem Fall ist es denkbar, ein oder mehrere dieser Bauteile als Single-Use-Komponenten auszubilden, insbesondere den oder die Filter.

Die beschriebenen Montagemodule, sowohl die tragstrukturlosen als auch die ein Gehäuse aufweisenden Montagemodule, sind insbesondere so ausgestaltet, dass sich mehrere Montagemodule mit identischem Aufbau und/oder Montagemodule mit unterschiedlichem Aufbau miteinander mechanisch, pneumatisch, hydraulisch und/oder elektrisch über jeweils mindestens eine entsprechende Schnittstelle miteinander verbinden lassen. In dem Fall, dass die Montagemodule eine Tragstruktur bzw. ein Gehäuse aufweisen, lassen sich diese insbesondere vertikal übereinander stapeln (Anspruch 12).

Nach den besonders bevorzugten Ausgestaltungen gemäß den Ansprüchen 14 bis 16 weist das Filtrationsversuchssystem einen Träger auf, an dem der jeweilige Vorlagebehälter und/oder ein oder mehrere Sensoren, Ventile und/oder Montagemodule fixierbar oder fixiert sind.

Der Träger kann ein Stativ, insbesondere ein stangenförmiges oder plattenförmiges Stativ, mit einem insbesondere höhenverstellbaren Halter sein. Es ist aber auch denkbar, dass der Träger eine, insbesondere an einem Stativ, beispielsweise stangenförmigen oder plattenförmigen Stativ, befestigte, Montageplatte ist, an der der jeweilige Vorlagebehälter und/oder der jeweilige Sensor und/oder das jeweilige Montagemodul fixierbar oder fixiert ist.

Eine Fixierung erfolgt in letzterem Fall besonders bevorzugt magnetisch. Für eine magnetische Fixierung weist das jeweilige Bauteil, beispielsweise der jeweilige Vorlagebehälter und/oder der jeweilige Sensor, vorzugsweise einen Befestigungsabschnitt mit einem Magneten auf, wobei die Montageplatte zumindest an den für die Befestigung des jeweiligen Sensors vorgesehenen Stellen oder insgesamt magnetisch, insbesondere aus Metall, ausgestaltet ist. Grundsätzlich ist es auch denkbar, dass an der Montageplatte zumindest an den für die Befestigung des jeweiligen Sensors vorgesehenen Stellen ein Magnet vorgesehen ist, wobei dann der Sensor einen magnetischen Befestigungsabschnitt, insbesondere aus Metall, aufweist. Zusätzlich oder alternativ kann aber auch eine formschlüssige und/oder kraftschlüssige Fixierung vorgesehen sein. Eine solche Fixierung kann beispielsweise durch eine Klemm- oder Steckverbindung zwischen dem jeweiligen Sensor und der Montageplatte erfolgen.

Die Montageplatte ist vorzugsweise Bestandteil eines Gehäuses eines wie zuvor definierten Datenempfangsinstruments, insbesondere des Datenempfangsinstruments, das eingerichtet ist, als Verarbeitung der Sensordaten, ein Bündeln der Sensordaten zu Datenpaketen und Versenden der Datenpakete und/oder ein Umwandeln von analogen Sensordaten in digitale Sensordaten und/oder, insbesondere vor dem Umwandeln, ein Verstärken der analogen Sensorsignale durchzuführen (Anspruch 16). Durch das Bündeln der Sensordaten zu Datenpaketen verlaufen weniger Datenkabel, vorzugsweise nur ein einzelnes Datenkabel, zur Übertragung von Sensordaten zu dem Steuergerät, was die Handhabung des Filtrationsversuchssystems vereinfacht.

Anspruch 17 definiert, dass der jeweilige Träger und/oder das jeweilige Stativ mechanisch mit dem Gehäuse einer Waage der Wägeanordnung verbunden sein kann.

Nach einer weiteren Lehre gemäß Anspruch 18, der eigenständige Bedeutung zukommt, wird ein Verfahren für den Betrieb eines bioprozesstechnischen, insbesondere biopharmazeutischen, Filtrationsversuchssystems gemäß dem Oberbegriff von Anspruch 18 beansprucht.

Eine weitere Lehre, die nicht Gegenstand der Erfindung ist, betrifft eine Verwendung eines verpackten Filtrationsversuchssatzes aus vorkonfektionierten Anlagenkomponenten für den Aufbau eines vorschlagsgemäßen bioprozesstechnischen, insbesondere biopharmazeutischen, Filtrationsversuchssystems. Es darf insoweit auf die Ausführungen zu dem vorschlagsgemäßen bioprozesstechnischen Filtrationsversuchssystem verwiesen werden.

Wesentlich ist, dass der Filtrationsversuchssatz in der Verpackung mindestens ein Montagemodul aus mindestens einem Leitungsabschnitt des Fluidleitungsnetzwerks, der mit mindestens einem Sensor der Sensoranordnung, mindestens einem Filter der Filteranordnung und/oder mindestens einem Ventil der Ventilanordnung bestimmungsgemäß verbunden ist, aufweist. Auch kann ein Vorlagebehälter, der vorzugsweise mit dem Leitungsabschnitt fluidtechnisch verbunden ist, als Teil des Montagemoduls vorgesehen sein. Für die Montage des bioprozesstechnischen Filtrationsversuchssystems wird der Filtrationsversuchssatz entpackt, also der Verpackung entnommen, und mit anderen Anlagenkomponenten mechanisch, fluidtechnisch und/oder elektrisch verbunden.

Im Folgenden wird die Erfindung anhand einer lediglich Ausführungsbeispiele darstellenden Zeichnung näher erläutert. In der Zeichnung zeigt
- Fig. 1: ein vorschlagsgemäßes bioprozesstechnisches Filtrationsversuchssystem gemäß einem ersten Ausführungsbeispiel in einer schematischen Perspektivansicht,
- Fig. 2: ein vorschlagsgemäßes bioprozesstechnisches Filtrationsversuchssystem gemäß einem zweiten Ausführungsbeispiel in einer schematischen Perspektivansicht,
- Fig. 3: ein vorschlagsgemäßes bioprozesstechnisches Filtrationsversuchssystem gemäß einem dritten Ausführungsbeispiel in einer schematischen Perspektivansicht und
- Fig. 4: das Filtrationsversuchssystem gemäß Fig. 3 in einer schematischen Schnittansicht im zusammengebauten Zustand (links) und während des Zusammenbaus (rechts).

Es darf vorab darauf hingewiesen werden, dass in der Zeichnung nur die Komponenten des vorschlagsgemäßen bioprozesstechnischen, insbesondere biopharmazeutischen, Filtrationsversuchssystems 1 dargestellt sind, die für die Erläuterung der Lehren erforderlich sind. Entsprechend ist für eine gute Übersichtlichkeit auf die Darstellung einer Mehrzahl zusätzlich vorgesehener Druckluftquellen, Stromversorgungsquellen, Ventile, Sensoren oder dergleichen verzichtet worden.

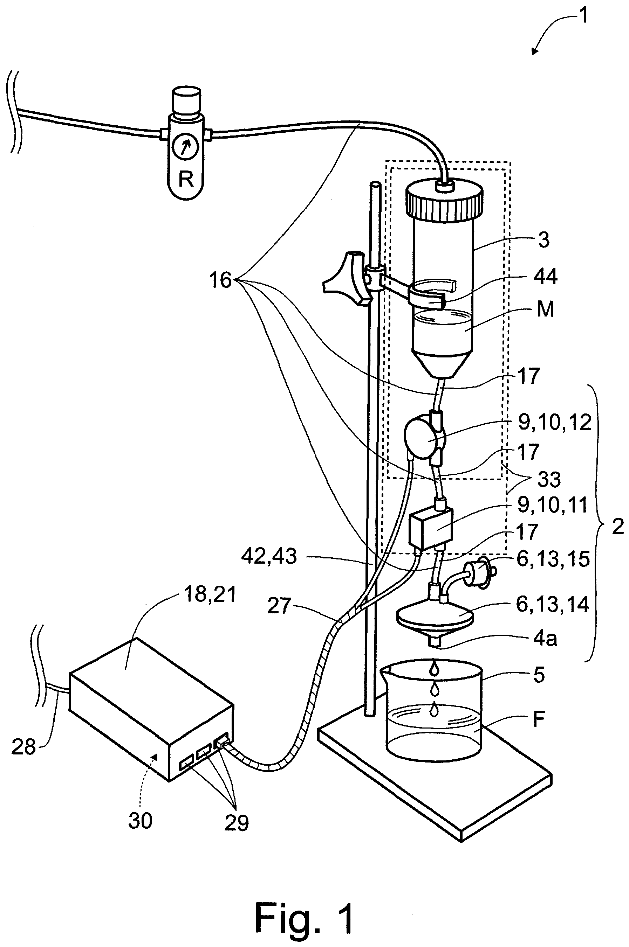

Die in den Fig. 1 bis 4 jeweils dargestellten Filtrationsversuchssysteme 1 dienen dem Filtrieren eines flüssigen, hier beispielsweise biologischen, Testmediums M in einer Filtrationsversuchsstrecke 2 des Filtrationsversuchssystems 1.

Die Filtrationsversuchsstrecke 2 führt von einem Vorlagebehälter 3 zur Aufnahme des zu filtrierenden Testmediums M zu einem Fluidauslass 4a, aus dem das filtrierte Testmedium F (Filtrat) in einen Auffangbehälter 5 gelangt. Der Auffangbehälter 5 wird hier der Filtrationsversuchsstrecke 2 nicht zugerechnet. Die Filtrationsversuchsstrecke 2 beginnt mit dem Vorlagebehälter 3, erstreckt sich dann stromabwärts und endet mit dem Fluidauslass 4a. Das Filtrationsversuchssystem 1 ist eingerichtet, im Rahmen eines Filtrationsversuchs Sensordaten als Versuchsdaten zu mindestens einem Filter 6 der Filtrationsversuchsstrecke 2 zu ermitteln. Auf Basis der Versuchsdaten ist dann, nach vorbestimmten Skalierungskriterien, zu dem jeweiligen Filter 6 der Filtrationsversuchsstrecke 2, zu dem die Versuchsdaten ermittelt wurden, ein entsprechender Filter eines Zielsystems auswählbar und/oder dimensionierbar.

Wesentlich ist nun, dass das Filtrationsversuchssystem 1 zumindest teilweise programmier- und/oder schaltungstechnisch, zumindest teilweise fluidtechnisch und/oder zumindest teilweise sensortechnisch vorkonfektioniert ist. "Programmier- und/oder schaltungstechnisch vorkonfektioniert" meint, dass eine Software und/oder elektrische Schaltung, insbesondere integrierte Schaltung, die in dem Filtrationsversuchssystem 1 vorgesehen ist, versuchsspezifisch ausgestaltet ist. "Fluidtechnisch vorkonfektioniert" meint, dass eine Einheit aus fluidtechnisch, also pneumatisch und/oder hydraulisch, durchströmbaren Bauteilen des Filtrationsversuchssystems 1, insbesondere der Filtrationsversuchsstrecke 2, versuchsspezifisch ausgestaltet ist. "Sensortechnisch vorkonfektioniert" meint, dass die Sensorik des Filtrationsversuchssystems 1 versuchsspezifisch ausgestaltet ist.

Die hier beispielhaft erläuterten Filtrationsversuchssysteme 1, insbesondere die Filtrationsversuchsstrecken 2, weisen hier und vorzugsweise eine Ventilanordnung 7 mit einem oder mehreren Ventilen 8, eine Sensoranordnung 9 mit einem oder mehreren Sensoren 10, insbesondere einem oder mehreren Drucksensoren 11, Volumenstromsensoren 12 (auch Durchfluss- oder Flow-Sensoren genannt) und/oder Temperatursensoren, eine Filteranordnung 13 mit einem oder mehreren Filtern 6, beispielsweise Flachfiltern, insbesondere Flüssigkeitsfiltern 14 und/oder Luftfiltern 15, beispielsweise eines Entlüftungsventils, und/oder ein Fluidleitungsnetzwerk 16 mit mehreren Leitungsabschnitten 17, über die das Testmedium M zu dem jeweiligen Filter 6, 14 gelangt, auf. Dabei sind hier die Flüssigkeitsfilter 14 die Filter, zu denen die Versuchsdaten ermittelt werden, wohingegen die gegebenenfalls vorhandenen Luftfilter 15 lediglich als Hilfsmittel für das Benetzen des jeweiligen Flüssigkeitsfilters 14 dienen.

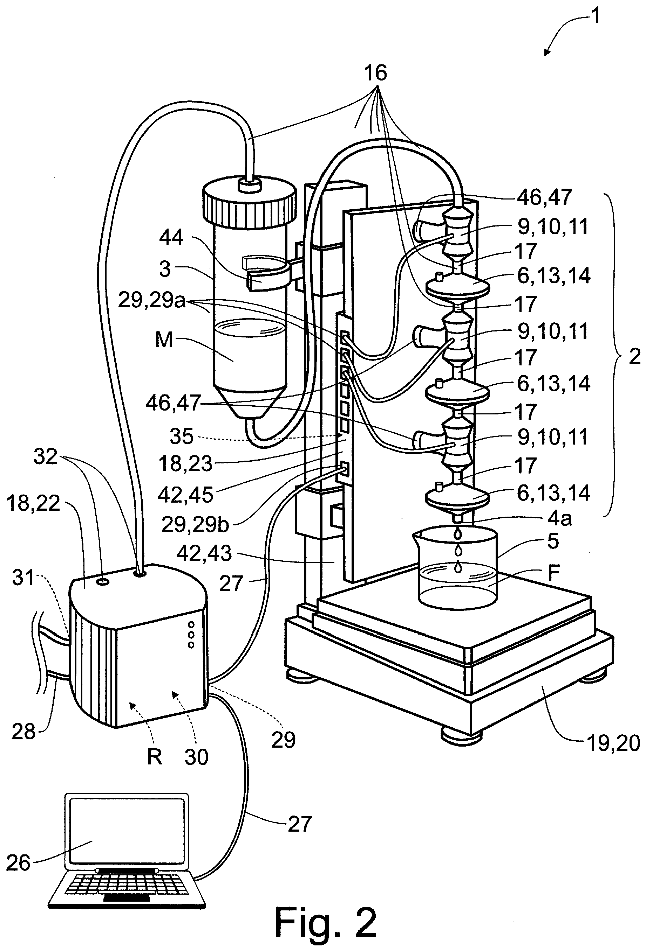

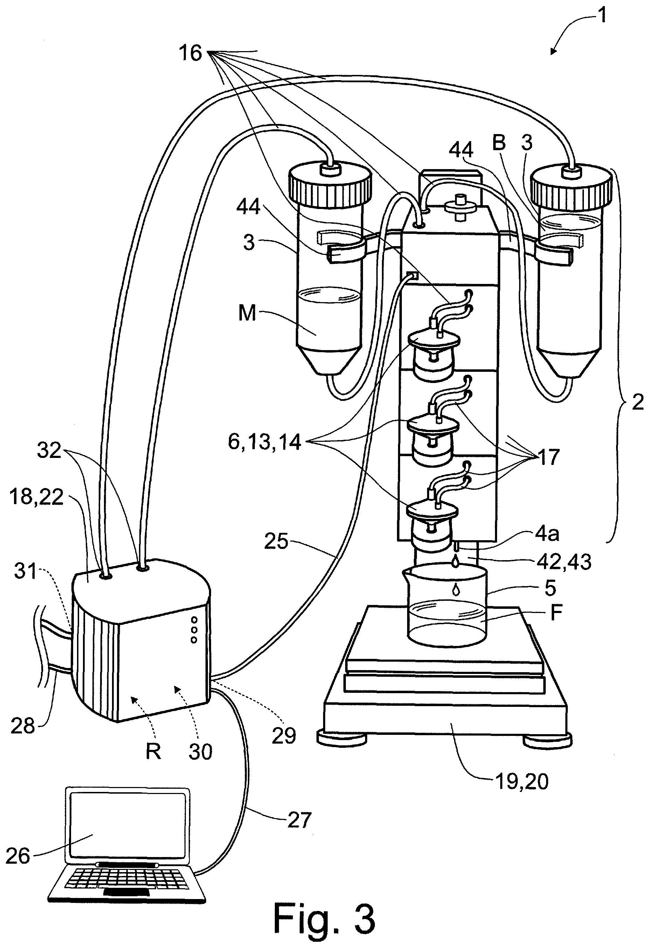

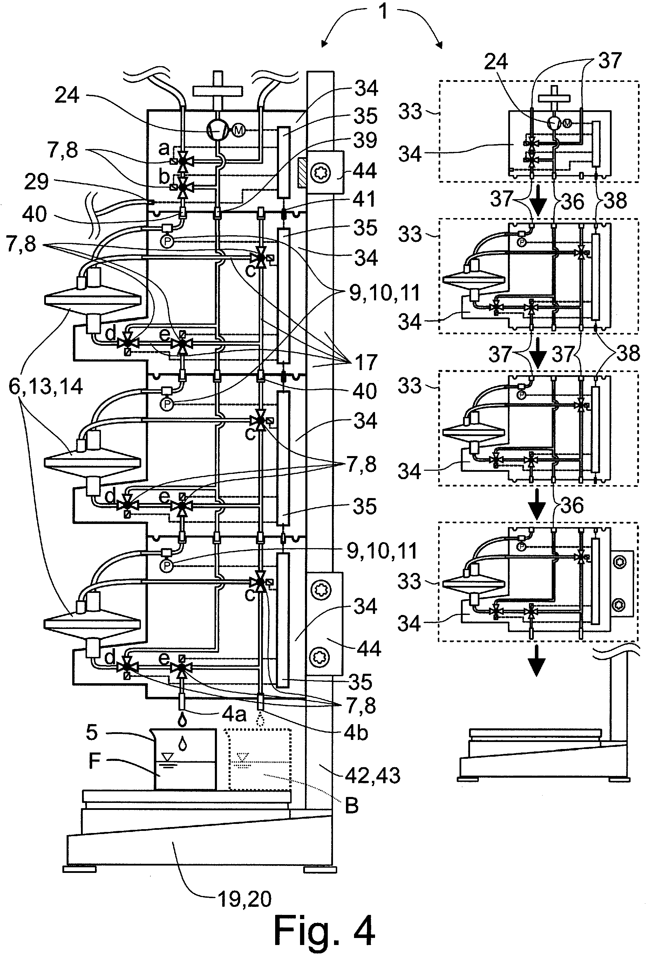

Bei dem Ausführungsbeispiel gemäß Fig. 1 handelt es sich bei den Sensoren 10, 11, 12, den Filtern 6, 14, 15 und den Leitungsabschnitten 17 vorzugsweise um Single-Use-Komponenten. Entsprechendes gilt vorzugsweise zumindest für die Filter 6, 14 bei dem Ausführungsbeispiel gemäß Fig. 2 und dem Ausführungsbeispiel gemäß Fig. 3 und 4. In einer hier nicht dargestellten Variante können auch die Ventile 8 als Single-Use-Komponenten ausgestaltet sein. Bei dem Ausführungsbeispiel gemäß Fig. 2 sind außerdem auch die Leitungsabschnitte 17 als Single-Use-Komponenten ausgestaltet, wobei vorzugsweise auch auf Leitungsabschnitte 17 zwischen Sensor 9 und Filter 6 verzichtet werden kann. Schließlich sind, jedenfalls bei dem Ausführungsbeispiel gemäß Fig. 1, auch der bzw. die Vorlagebehäter 3 vorzugsweise Single-Use-Komponenten.

Zusätzlich oder alternativ weist das Filtrationsversuchssystem 1 hier und vorzugsweise, wie in den Ausführungsbeispielen der Fig. 1 bis 4 dargestellt, mindestens ein Datenempfangsinstrument 18 zum Empfang von Sensordaten der Sensoranordnung 9 auf.

Zusätzlich oder alternativ weist das Filtrationsversuchssystem 1 hier und vorzugsweise, wie in den Ausführungsbeispielen der Fig. 2 bis 4 dargestellt, eine Wägeanordnung 19 mit einer Waage 20 auf.

Es sind unterschiedliche Arten von Datenempfangsinstrumenten 18 in den Ausführungsbeispielen vorgesehen.

So ist das Datenempfangsinstrument 18 bei dem Ausführungsbeispiel in Fig. 1 ein Gerät 21, das neben dem Empfang von Sensordaten auch eine Erfassung der Sensordaten, also ein Aufzeichnen der Sensordaten, erlaubt. Weder ist hier ein Benutzer-Interface, noch die Möglichkeit einer Steuerung von Ventilen oder einer Pumpe oder eines pneumatischen Druckreglers vorgesehen. Das Datenempfangsinstrument 18 in Form des Geräts 21 ist hier und vorzugsweise aber eingerichtet, den Versuchsbeginn eines Filtrationsversuchs automatisch zu erkennen und die Aufzeichnung der Sensordaten automatisch zu starten und/oder das Versuchsende eines Filtrationsversuchs automatisch zu erkennen und die Aufzeichnung der Sensordaten automatisch zu beenden. Beispielsweise wird hier durch Druckbeaufschlagung das Testmedium M in Bewegung gesetzt, wodurch der Volumenstromsensor 12 aktiviert wird, insbesondere ein Messrad (Flügelrad) des Volumenstromsensors 12 zu drehen beginnt, und das Datenempfangsinstrument 18 anhand der entsprechenden Sensordaten den Versuchsbeginn erkennt. Umgekehrt wird der Volumenstromsensor 12 inaktiviert bzw. hört das Messrad des Volumenstromsensors 12 auf, sich zu drehen, sobald kein Testmedium M mehr durch diesen hindurchströmt, wobei das Datenempfangsinstrument 18 anhand der entsprechenden Sensordaten oder einem Fehlen weiterer Sensordaten dann das Versuchsende erkennt.

Um das Testmedium M unter Druck durch die Filtrationsversuchsstrecke 2 zu leiten, wird in dem Ausführungsbeispiel gemäß Fig. 1, aber auch in den anderen Ausführungsbeispielen, beispielweise Druckluft, vorzugsweise über eine externe Druckluftquelle, bereitgestellt, insbesondere über ein externes Druckluftnetzwerk, eine externe Druckluftflasche oder dergleichen (hier nicht dargestellt), gegebenenfalls unter fluidtechnischer Zwischenschaltung eines pneumatischen Druckreglers R zwischen Druckluftquelle und Vorlagebehälter 3. Anstelle von Druckluft kann zum Transport des Testmediums M grundsätzlich aber auch eine Hydraulikpumpe, z.B. Schlauchpumpe, vorgesehen sein.

Das jeweilige Datenempfangsinstrument 18 in Form des Geräts 21 ist hier und vorzugsweise schließlich auch eingerichtet, die empfangenen Sensordaten, die hier Rohdaten sind, als Versuchsdaten von einem separaten Datenverarbeitungs- und/oder -auswertegerät, beispielsweise einem externen Rechner (hier nicht dargestellt), auslesen zu lassen. Beispielsweise kann das Datenempfangsinstrument 18 gemäß Fig. 1 nach der Aufzeichnung von Sensordaten eines oder mehrerer Filtrationsversuche, gegebenenfalls nach einer VorBearbeitung, beispielsweise in Form eines Glättens und/oder Mittelns einiger oder aller Sensordaten, vom Benutzer zum Hersteller des Filtrationsversuchssystems 1 zur Auswertung eingeschickt werden. Hierfür kann ein Datenkabel (hier nicht dargestellt) an das Gerät 21 angeschlossen werden, das das Gerät 21 mit dem Datenverarbeitungs- und/oder -auswertegerät bzw. Rechner verbindet. Das Datenverarbeitungs- und/oder -auswertegerät bzw. der Rechner erkennt das Gerät 21 dann insbesondere als Laufwerk, das ein Kopieren, Verschieben und/oder Löschen der gespeicherten Sensordaten ermöglicht. Über das Datenverarbeitungs- und/oder -auswertegerät bzw. den Rechner kann dann, nach vorbestimmten Skalierungskriterien, zu dem jeweiligen Filter 6, 14 der Filtrationsversuchsstrecke 2 ein entsprechender Filter eines Zielsystems ausgewählt und/oder dimensioniert werden.

Bei dem Ausführungsbeispiel in Fig. 2 weist das Filtrationsversuchssystem 1 zwei unterschiedliche Datenempfangsinstrumente 18 auf.

Das eine Datenempfangsinstrument 18 ist ein Steuergerät 22, das neben dem Empfang und gegebenenfalls der Erfassung von Sensordaten auch eine Verarbeitung der Sensordaten erlaubt, und zwar hier und vorzugsweise derart, dass basierend auf den Sensordaten ein pneumatischer Druckregler R zwischen Druckluftquelle und Vorlagebehälter 3 angesteuert werden kann. In einem anderen, hier nicht dargestellten Ausführungsbeispiel kann auch eine Pumpe basierend auf den Sensordaten angesteuert werden. Die Verarbeitung der Sensordaten umfasst in diesem Fall ein Vergleichen der Sensordaten jeweils mit mindestens einem Sollwert oder Sollwertebereich, insbesondere für Druck-Sensordaten und/oder Volumenstrom-Sensordaten. Der Druck der Druckluft wird dann hier über den pneumatischen Druckregler R so geregelt, dass sich im Filtrationsversuchssystem 1, insbesondere in der Filtrationsversuchsstrecke 2, ein vorgegebener, konstanter oder variierender, Druck oder Volumenstrom des Testmediums M und/oder der Druckluft und/oder einer Benetzungsflüssigkeit B und/oder einer Spülflüssigkeit einstellt. In einem anderen, hier nicht dargestellten Ausführungsbeispiel kann auch die Pumpe so geregelt werden, dass sich im Filtrationsversuchssystem 1, insbesondere in der Filtrationsversuchsstrecke 2, ein vorgegebener, konstanter oder variierender, Druck oder Volumenstrom des Testmediums M und/oder der Druckluft und/oder einer Benetzungsflüssigkeit B und/oder einer Spülflüssigkeit einstellt.

Vorzugsweise können über den pneumatischen Druckregler R, der in das Steuergerät 22 integriert sein kann, beispielsweise die Versuchstypen "constant pressure" und "constant flow" bedient werden. Bei dem Versuchstyp "constant pressure" wird der Druck des Testmediums M während des Filtrationsversuchs auf einem konstanten Wert gehalten. Bei dem Versuchstyp "constant flow" wird der Volumenstrom des Testmediums M während des Filtrationsversuchs auf einem konstanten Wert gehalten. Alternativ lässt sich dies auch über eine dem Vorlagebehälter 3 fluidtechnisch vorgeschaltete, gegebenenfalls in das Steuergerät 22 integrierte, Pneumatikpumpe oder eine fluidtechnisch zwischen Vorlagebehälter 3 und Filtrationsversuchsstrecke 2 geschaltete Hydraulikpumpe (hier nicht dargestellt) erreichen. Grundsätzlich sind auch Versuchstypen mit variierendem Druck des Testmediums M und variierendem Volumenstrom des Testmediums M denkbar. Auch denkbar sind Filtrationsversuche, bei denen zuerst der Versuchstyp "constant pressure" und dann der Versuchstyp "constant flow", oder umgekehrt, durchgeführt wird.

Das Datenempfangsinstrument 18 in Form des Steuergeräts 22 kann grundsätzlich auch eingerichtet sein, den Versuchsbeginn eines Filtrationsversuchs automatisch zu erkennen und die Steuerung automatisch zu starten und/oder das Versuchsende eines Filtrationsversuchs automatisch zu erkennen und die Steuerung automatisch zu beenden. Hier und vorzugsweise ist aber ein externer Rechner 26 vorgesehen, der über ein Datenkabel 27 oder eine drahtlose Verbindung mit dem Datenempfangsinstrument 18 bzw. Steuergerät 22 verbunden ist und über den der Benutzer den Versuchsbeginn und/oder das Versuchsende bestimmen kann.

Das Steuergerät 22 ist hier und vorzugsweise von der Filtrationsversuchsstrecke 2 und der Waage 20 sowie insbesondere auch von einem im weiteren noch beschriebenen Träger 42 bzw. Stativ 43 räumlich beabstandet und vorzugsweise auch unabhängig davon platzierbar. "Räumlich beabstandet" bedeutet, dass ein vertikaler und/oder horizontaler Abstand zu den Bauteilen der Filtrationsversuchsstrecke 2, zu der Waage 20 sowie insbesondere auch zu dem Träger 42 bzw. Stativ 43 vorgesehen ist.

Das andere Datenempfangsinstrument 18 in Fig. 2 ist ein Gerät 23, das ebenfalls neben der Erfassung von Sensordaten eine Verarbeitung der Sensordaten ermöglicht, wobei die Verarbeitung der Sensordaten hier ein Bündeln von Sensordaten zu Datenpaketen und Versenden der Datenpakete und/oder ein Umwandeln von analogen Sensordaten in digitale Sensordaten und/oder, insbesondere vor dem Umwandeln, ein Verstärken der analogen Sensorsignale umfasst.

Das Datenempfangsinstrument 18 in Form des Geräts 23 ist hier und vorzugsweise auch eingerichtet, die Konfiguration der Sensoranordnung 9, insbesondere die Anzahl der Sensoren 10, 11, 12 und/oder die Position der Sensoren 10, 11, 12 am Gerät 23 und/oder in der Filtrationsstrecke und/oder das Messprinzip der Sensoren 10, 11, 12, automatisch zu erkennen und vorzugsweise die obige Verarbeitung der Sensordaten davon abhängig durchzuführen.

Die von dem Gerät 23 verarbeiteten Sensordaten werden dann an das Steuergerät 22 weitergeleitet.

Das Gerät 23 ist hier und vorzugsweise benachbart zur und entlang der Filtrationsversuchsstrecke 2 angeordnet und mit den Sensoren 10 in mechanischem Kontakt, insoweit also nicht von der Filtrationsversuchsstrecke 2 räumlich beabstandet. Auch ist das Gerät 23 mit dem Stativ 43 in mechanischem Kontakt, insoweit also nicht von dem Stativ 43 räumlich beabstandet. Daher ist das Gerät 23 auch nicht unabhängig von der Filtrationsversuchsstrecke 2 und/oder dem Stativ 43 platzierbar.

Bei dem Ausführungsbeispiel in Fig. 3 und 4 ist ebenfalls ein Datenempfangsinstrument 18 in Form des zuvor beschriebenen Steuergeräts 22 vorgesehen, das ebenfalls neben dem Empfang und gegebenenfalls der Erfassung von Sensordaten eine Verarbeitung der Sensordaten zur Steuerung eines insbesondere geräteinternen pneumatischen Druckreglers R ermöglicht. Zusätzlich oder alternativ kann das Datenempfangsinstrument 18 bzw. Steuergerät 22 auch die Verarbeitung der Sensordaten zur Steuerung von Ventilen 8 der Ventilanordnung 7 und/oder einer insbesondere geräteexternen Pumpe, beispielsweise einer Hydraulikpumpe zum Fördern des Testmediums M und/oder einer Pneumatikpumpe 24, die Druckluft zur Entleerung und Reinigung des Fluidleitungsnetzwerks 16 der Filtrationsversuchsstrecke 2 erzeugt, ermöglichen. Die Begriffe "geräteextern" und "geräteintern" sind hier immer auf das Steuergerät 22 bezogen.

Vorzugsweise steuert bei dem Ausführungsbeispiel gemäß Fig. 3 und 4 das Steuergerät 22 die Ventile 8 der Ventilanordnung 7 und/oder die Pumpe, beispielsweise Hydraulikpumpe und/oder Pneumatikpumpe 24, über ein Steuerkabel 25, das mit dem Steuergerät 22 verbunden ist.

Das jeweilige Datenempfangsinstrument 18 in Form des Steuergeräts 22 ist hier und vorzugsweise schließlich auch eingerichtet, die empfangenen Sensordaten, die Rohdaten oder bereits verarbeitete Sensordaten sein können, und/oder die von dem Steuergerät 22 selbst verarbeiteten Sensordaten als Versuchsdaten an ein separates Datenverarbeitungs- und/oder -auswertegerät, beispielsweise einen externen Rechner 26, zu übertragen. Hierfür ist ein Datenkabel 27 oder eine drahtlose Verbindung vorgesehen, das bzw. die das Steuergerät 22 jeweils mit dem Datenverarbeitungs- und/oder -auswertegerät bzw. Rechner 26 verbinden kann. Über das Datenverarbeitungs- und/oder -auswertegerät bzw. den Rechner 26 kann dann auch in diesem Fall, nach vorbestimmten Skalierungskriterien, zu dem jeweiligen Filter 6, 14 der Filtrationsversuchsstrecke 2 ein entsprechender Filter eines Zielsystems ausgewählt und/oder dimensioniert werden.

Wie bereits zuvor beschrieben, sind bei dem vorschlagsgemäßen Filtrationsversuchssystem 1 ein oder mehrere Möglichkeiten einer Vorkonfektionierung, nämlich einer programmier- und/oder schaltungstechnischen Vorkonfektionierung und/oder einer fluidtechnischen Vorkonfektionierung und/oder einer sensortechnischen Vorkonfektionierung, denkbar. Diese Möglichkeiten der Vorkonfektionierung sollen im Folgenden näher erläutert werden.

So sind hier und vorzugsweise alle Datenempfangsinstrumente 18 betreffend den Empfang von Sensordaten der Sensoranordnung 9 programmier- und/oder schaltungstechnisch vorkonfektioniert. Dabei ist hier und vorzugsweise das Datenempfangsinstrument 18 in Form des in Fig. 1 dargestellten Geräts 21 auch betreffend die Erfassung von Sensordaten der Sensoranordnung 9 programmier- und/oder schaltungstechnisch vorkonfektioniert. Das Datenempfangsinstrument 18 in Form des in den Fig. 2 und 3 dargestellten Steuergeräts 22 ist zur Verarbeitung von Sensordaten der Sensoranordnung 9 programmier- und/oder schaltungstechnisch vorkonfektioniert, hier und vorzugsweise derart, dass die Verarbeitung der Sensordaten ein Vergleichen der Sensordaten mit mindestens einem Sollwert oder Sollwertebereich umfasst. Das Datenempfangsinstrument 18 in Form des Geräts 23 ist ebenfalls betreffend die Verarbeitung von Sensordaten der Sensoranordnung 9 programmier- und/oder schaltungstechnisch vorkonfektioniert, hier und vorzugsweise derart, dass die Verarbeitung der Sensordaten ein Bündeln von Sensordaten zu Datenpaketen und Versenden der Datenpakete, und zwar an das Steuergerät 22, und/oder, wenn es sich beispielsweise um analoge Sensoren 10, 11, 12 handelt, ein Umwandeln von analogen Sensordaten in digitale Sensordaten und/oder, insbesondere vor dem Umwandeln, ein Verstärken der analogen Sensorsignale umfasst.

Das in den Fig. 2 und 3 dargestellte Datenempfangsinstrument 18 in Form des Steuergeräts 22 ist hier und vorzugsweise auch betreffend die Steuerung des pneumatischen Druckreglers R und/oder der Pumpe programmier- und/oder schaltungstechnisch vorkonfektioniert. Bei dem Ausführungsbeispiel gemäß Fig. 2 ist das Datenempfangsinstrument 18 bzw. Steuergerät 22 betreffend die Steuerung des in das Steuergerät 22 integrierten pneumatischen Druckreglers R programmier- und/oder schaltungstechnisch vorkonfektioniert. Zusätzlich oder alternativ kann, wie bei dem Ausführungsbeispiel gemäß Fig. 3 und 4, das Datenempfangsinstrument 18 bzw. Steuergerät 22 betreffend die Steuerung einer Pumpe, hier beispielsweise der Pneumatikpumpe 24, die stromabwärts des Steuergeräts 22 vorgesehen ist, programmier- und/oder schaltungstechnisch vorkonfektioniert sein.

Durch diese Vorkonfektionierung ist der pneumatische Druckregler R und/oder die gegebenenfalls vorhandene Pumpe hier und vorzugsweise wie folgt steuerbar. So ist vorzugsweise ein vorgegebener, konstanter oder variierender, Druck oder Volumenstrom des Testmediums M in der Filtrationsversuchsstrecke 2 und/oder, bei dem Ausführungsbeispiel gemäß Fig. 3 und 4, auch ein definierter, konstanter oder variierender, Druck oder Volumenstrom einer Benetzungsflüssigkeit B, insbesondere bei einem automatischen Filterbenetzungsvorgang, in der Filtrationsversuchsstrecke 2 erzeugbar. Zusätzlich oder alternativ ist es denkbar, dass ein definierter, konstanter oder variierender, Druck oder Volumenstrom der von der Pumpe 24 erzeugten Druckluft und/oder einer Spülflüssigkeit, insbesondere bei einem automatischen Entleer- und/oder Spülvorgang, in der Filtrationsversuchsstrecke 2 erzeugbar ist.

Weiterhin ist hier und vorzugsweise das Datenempfangsinstrument 18 in Form des Steuergeräts 22 gemäß dem Ausführungsbeispiel in Fig. 3 betreffend die Steuerung eines oder mehrerer Ventile 8 der Ventilanordnung 7 programmier- und/oder schaltungstechnisch vorkonfektioniert. Die Vorkonfektionierung ist hier insbesondere betreffend die Steuerung des jeweiligen Ventils 8 bei einem Filterbenetzungsvorgang, bei einem Filterentlüftungsvorgang, bei einem Filtrationsversuch mit dem Testmedium M und/oder bei einem Entleer- und/oder Spülvorgang vorgesehen.

Das jeweilige Datenempfangsinstrument 18 ist vorzugsweise mit einer Spannungsversorgung 28 und/oder mindestens einer Datenschnittstelle 29, zumindest zum Empfang (Dateneingang 29a), gegebenenfalls auch zum Auslesen oder Ausgeben (Datenausgang 29b), von Sensordaten versehen. Das Datenempfangsinstrument 18 in Form des in Fig. 1 dargestellten Geräts 21 ist, wenn damit Sensordaten aufgezeichnet werden können, ferner insbesondere mit einem Speicher 30 zum Speichern von Sensorrohdaten und/oder verarbeiteten Sensordaten versehen. Ein solcher Speicher 30 ist optional auch bei dem Datenempfangsinstrument 18 in Form des in Fig. 2 und 3 dargestellten Steuergeräts 22 vorgesehen. Das in den Fig. 2 und 3 dargestellte Datenempfangsinstrument 18 in Form des Steuergeräts 22 weist ferner einen pneumatischen Einlass 31 und mindestens einen pneumatischen Auslass 32 auf. Hierbei ist, wie bereits zuvor erläutert, in das Steuergerät 22 insbesondere auch ein pneumatischer Druckregler R integriert, der den Einlass 31 mit dem Auslass 32 verbindet und vorzugsweise einen konstanten Druck oder einen einen konstanten Volumenstrom bewirkenden Druck erzeugt, um entweder das Testmedium M oder die Benetzungsflüssigkeit B durch die Filtrationsversuchsstrecke 2 zu leiten.

Zu allen Ausführungsbeispielen sei darauf hingewiesen, dass das jeweilige Datenempfangsinstrument 18 vorzugsweise frei von hydraulischen Anschlüssen ist. Insbesondere ist das jeweilige Datenempfangsinstrument 18 hier auch räumlich beabstandet zu der Filtrationsversuchsstrecke 2 und, jedenfalls im Falle des Geräts 21 und/oder des Steuergeräts 22, räumlich beabstandet zu der Waage 20 sowie insbesondere auch räumlich beabstandet zu einem im weiteren noch beschriebenen Träger 42 bzw. Stativ 43 anordenbar.

Im Folgenden soll nun kurz auf Möglichkeiten der sensortechnischen und der fluidtechnischen Vorkonfektionierung des Filtrationsversuchssystems eingegangen werden.

Eine sensortechnische Vorkonfektionierung ist hier und vorzugsweise betreffend das Messprinzip, die Spezifikationen und/oder die Einbaulage mindestens eines Sensors 10 der Sensoranordnung 9 vorgesehen. Nach dem Messprinzip werden Sensoren beispielsweise in Drucksensoren, Volumenstromsensoren und Temperatursensoren eingeteilt. Mit "Spezifikationen" sind die technischen und funktionalen Aspekte, darunter insbesondere die Abmessungen, des jeweiligen Sensors 10 gemeint. Bei einem Sensor 10 umfassen die Spezifikationen beispielsweise auch die maximale Messabweichung, den Standardmessfehler, die Temperaturabhängigkeit etc. Die "Einbaulage" bezeichnet die jeweilige Lage des Sensors 10 innerhalb des Filtrationsversuchssystems 1, insbesondere innerhalb der Filtrationsversuchsstrecke 2. Beispiele für die Einbaulage sind beispielsweise eine Stelle vor oder hinter einem bestimmten anderen Bauteil der Filtrationsversuchsstrecke 2, bei einem Volumenstromsensor oder Drucksensor beispielsweise eine Stelle stromaufwärts eines Filters 6, insbesondere eines Filters 6, zu dem die Versuchsdaten ermittelt werden.

Eine fluidtechnische Vorkonfektionierung ist hier und vorzugsweise betreffend das Funktionsprinzip, die Spezifikationen und/oder die Einbaulage mindestens eines Filters 6, 14, 15 der Filteranordnung 13 vorgesehen. Nach dem Funktionsprinzip werden Filter beispielsweise in Flüssigkeitsfilter und Luftfilter und/oder in Oberflächenfilter, Tiefenfilter, Anschwemmfilter etc. eingeteilt. Mit "Spezifikationen" sind die technischen und funktionalen Aspekte, darunter insbesondere die Abmessungen, des jeweiligen Filters 6, 14, 15 gemeint. Bei einem Filter 6, 14, 15 umfassen die Spezifikationen beispielsweise auch das Filtermedium (Gewebe, Papier, Vlies, Fasern, Körner), den Anfangsdruckverlust etc. Die "Einbaulage" bezeichnet die jeweilige Lage des Filters 6, 14, 15 innerhalb des Filtrationsversuchssystems 1, insbesondere innerhalb der Filtrationsversuchsstrecke 2. Beispiele für die Einbaulage sind beispielsweise eine Stelle vor oder hinter einem bestimmten anderen Bauteil der Filtrationsversuchsstrecke 2, beispielsweise eine Stelle stromabwärts eines Sensors 10.

Alternativ oder zusätzlich ist eine fluidtechnische Vorkonfektionierung hier und vorzugsweise betreffend die Betätigungsart, die Spezifikationen und/oder die Einbaulage mindestens eines Ventils 8 der Ventilanordnung 7 vorgesehen. Nach der Betätigungsart werden Ventile beispielsweise in handbetätigte, motorisch betätigte, magnetisch betätigte Ventile etc. eingeteilt. Mit "Spezifikationen" sind die technischen und funktionalen Aspekte, darunter insbesondere die Abmessungen, des jeweiligen Ventils 8 gemeint. Bei einem Ventil 8 umfassen die Spezifikationen beispielsweise auch die Art der Dichtwerkstoffe (hart-/weichdichtend), die Position der Dichtung (auf dem Kolben/im Gehäuse), den Dichtungsaufbau etc. Die "Einbaulage" bezeichnet die jeweilige Lage des Ventils 8 innerhalb des Filtrationsversuchssystems 1, insbesondere innerhalb der Filtrationsversuchsstrecke 2. Beispiele für die Einbaulage sind beispielsweise eine Stelle vor oder hinter einem bestimmten anderen Bauteil der Filtrationsversuchsstrecke 2, beispielsweise eine Stelle stromaufwärts oder stromabwärts eines Filters 6.

Alternativ oder zusätzlich ist eine fluidtechnische Vorkonfektionierung hier und vorzugsweise betreffend die Spezifikationen und/oder die Einbaulage mindestens eines Leitungsabschnitts 17 des Fluidleitungsnetzwerks 16 vorgesehen. Mit "Spezifikationen" sind die technischen und funktionalen Aspekte, darunter insbesondere die Abmessungen, des jeweiligen Leitungsabschnitts 17 gemeint. Bei einem Leitungsabschnitt 17 umfassen die Spezifikationen beispielsweise auch die Art des Materials, die Steifigkeit, die Lichtdurchlässigkeit etc. Die "Einbaulage" bezeichnet die jeweilige Lage des Leitungsabschnitts 17 innerhalb des Filtrationsversuchssystems 1, insbesondere innerhalb der Filtrationsversuchsstrecke 2. Beispiele für die Einbaulage sind beispielsweise eine Stelle vor oder hinter einem bestimmten anderen Bauteil der Filtrationsversuchsstrecke 2, beispielsweise eine Stelle stromaufwärts oder stromabwärts eines Filters 6.

Eine besonders bevorzugte Form der Vorkonfektionierung kann durch die Bereitstellung von Montagemodulen 33 erfolgen, also durch insbesondere herstellerseitig vormontierte Einheiten mit mehreren bestimmungsgemäß miteinander verbundenen Bauteilen, insbesondere gewählt aus der Gruppe umfassend die Bauteile "Sensor", "Filter", "Ventil" und "Leitungsabschnitt". Weitere Bauteile eines Montagemoduls 33 können ein Vorlagebehälter 3 und/oder eine Pumpe, insbesondere eine Hydraulikpumpe und/oder eine Pneumatikpumpe 24, und/oder, insbesondere in einem Gehäuse 34, eine Platine 35 sein.

Verschiedene Montagemodule 33, die in den Fig. 1 und 4 lediglich beispielhaft durch gestrichelte Rahmen eingefasst sind, werden im Folgenden beschrieben.

Grundsätzlich ist es denkbar, dass mindestens ein Vorlagebehälter 3, mindestens ein Sensor 10 der Sensoranordnung 9 und/oder mindestens ein Ventil 8 der Ventilanordnung 7 zusammen mit mindestens einem Leitungsabschnitt 17 des Fluidleitungsnetzwerks 16 ein fluidtechnisch und/oder sensortechnisch vorkonfektioniertes Montagemodul 33 bilden. Hier und vorzugsweise bildet ein Montagemodul 33 oder bilden mehrere solche Montagemodule 33 die Filtrationsversuchsstrecke 2.

Wie zuvor beschrieben, kann das jeweilige Montagemodul 33 auch den Vorlagebehälter 3 für das Testmedium M und/oder einen Vorlagebehälter 3 für Benetzungsflüssigkeit (B) und/oder Spülflüssigkeit aufweisen.

In Fig. 1 ist als ein Beispiel ein Montagemodul 33 aus einem Vorlagebehälter 3 für das Medium M, einem Volumenstromsensor 10, 12 und einem Leitungsabschnitt 17 dargestellt. Auch kann, was ebenfalls dargestellt ist, gemäß einem anderen Beispiel die Gesamtheit aus Vorlagebehälter 3, Volumenstromsensor 10, 12, Drucksensor 10, 11 und entsprechenden Leitungsabschnitten 17 ein Montagemodul 33 bilden. Der jeweilige Sensor 10, 11, 12 kann auch schon mit dem jeweils zugeordneten Datenkabel verbunden sein, das dann ebenfalls Bestandteil des jeweiligen Montagemoduls 33 ist.

Gemäß Fig. 1 weisen die einzelnen Montagemodule 33 keine zusätzliche Tragstruktur auf. Im Unterschied dazu ist in Fig. 4 bei jedem Montagemodul eine Tragstruktur in Form eines Gehäuses 34 des jeweiligen Montagemoduls 33 vorgesehen, hier und vorzugsweise in Form eines Kunststoff-, Harz-, Glas-, Keramik- und/oder Metallgehäuses.

Das Gehäuse 34 dient zur Aufnahme mindestens eines Sensors 10 der Sensoranordnung 9, mindestens eines Filters 6, 14, 15 der Filteranordnung 13, mindestens eines Ventils 8 der Ventilanordnung 7 und/oder mindestens eines Leitungsabschnitts 17 des Fluidleitungsnetzwerks 16. Das Montagemodul 33 bildet dann jeweils einen Block, nämlich entweder einen sogenannten Anschlussblock, oder einen sogenannten Erweiterungsblock oder einen sogenannten Basisblock.

Ein Anschlussblock ist hier und vorzugsweise eine bauliche Einheit mit einem Gehäuse 34, in oder an dem mehrere für den Aufbau einer Filtrationsversuchsstrecke 2 notwendige Bauteile, z.B. ein oder mehrere Ventile 8 und/oder Leitungsabschnitte 17, funktionsfähig installiert sind, wobei diese Einheit hier aber keine Anschlussmöglichkeit für einen Filter 6, 14, zu dem Versuchsdaten ermittelt werden sollen, aufweist. Im installierten Zustand, wenn also die Filtrationsversuchsstrecke einsatzbereit ist, dient diese Einheit hier allein zum Anschluss von einer oder mehreren pneumatischen, hydraulischen und/oder elektrischen Leitungen zur entsprechenden Versorgung aller bezogen auf die Strömungsrichtung des Testmediums M fluidtechnisch nachgeschalteten Blöcke. Über den Anschlussblock wird also im installierten Zustand das Testmedium M, gegebenenfalls eine Benetzungsflüssigkeit B und/oder Spülflüssigkeit und/oder Druckluft zum Entleeren der Filter 6, 14 und Leitungsabschnitte 17, in die Gesamtheit aller Blöcke eingeleitet und/oder die Gesamtheit aller Blöcke elektrisch angeschlossen. "Elektrisch angeschlossen" meint hier, dass eine Stromversorgung und/oder Datenübertragung ermöglicht wird. Über entsprechende Schnittstellen ist der Anschlussblock im installierten Zustand mit dem jeweils nächsten Block, nämlich dem Basisblock oder einem Erweiterungsblock, mechanisch, pneumatisch, hydraulisch und/oder elektrisch verbunden, um das Testmedium M, gegebenenfalls die Benetzungsflüssigkeit B und/oder Spülflüssigkeit und/oder die Druckluft, in diesen nächsten Block, der dann einen Filter 6, 14 aufweist, zu dem Versuchsdaten ermittelt werden sollen, zu leiten und/oder diesen nächsten Block elektrisch anzuschließen.

Der oder die dem Anschlussblock fluidtechnisch nachgeschalteten Blöcke, also zumindest der Basisblock und gegebenenfalls mindestens ein Erweiterungsblock, verfügen vorzugsweise über keine solchen Anschlussmöglichkeiten, über die das Testmedium M, gegebenenfalls die Benetzungsflüssigkeit B und/oder Spülflüssigkeit und/oder die Druckluft zum Entleeren, in die Gesamtheit aller Blöcke eingeleitet und/oder die Gesamtheit aller Blöcke elektrisch angeschlossen werden kann.

Ein Basisblock ist hier und vorzugsweise eine bauliche Einheit, die im installierten Zustand bezogen auf die Strömungsrichtung des Testmediums M fluidtechnisch am Ende der Gesamtheit aus allen Blöcken und insbesondere am Ende der Filtrationsversuchsstrecke 2 angeordnet ist und entsprechend einen Fluidauslass 4a zum Ausleiten des filtrierten Testmediums F und/oder der Benetzungsflüssigkeit B und/oder der Spülflüssigkeit aus der Gesamtheit aller Blöcke aufweist. Hier und vorzugsweise weist der Basisblock außerdem einen weiteren Fluidauslass 4b auf, der zur Ableitung von Flüssigkeitsresten beim Entlüften der Filter 6, 14, beim Benetzen der Filter 6, 14 und/oder beim Entleeren der Filter 6, 14 und Leitungsabschnitte 17 dient. Grundsätzlich kann ein solcher weiterer Fluidauslass 4b aber auch entfallen, wobei dann der Fluidauslass 4a dessen Funktion beim Entlüften, Benetzen und/oder Entleeren übernimmt (hier nicht dargestellt). Ein Basisblock ist hier und vorzugsweise eine bauliche Einheit mit einem Gehäuse 34, in oder an dem ebenfalls mehrere für den Aufbau einer Filtrationsversuchsstrecke 2 notwendige Bauteile, z.B. ein oder mehrere Ventile 8, Sensoren 10 und/oder Leitungsabschnitte 17, funktionsfähig installiert sind und an dem zusätzlich ein austauschbarer Filter 6, 14, zu dem Versuchsdaten ermittelt werden sollen, fluidtechnisch angeschlossen werden kann. Über entsprechende Schnittstellen ist der Basisblock im installierten Zustand mit dem bezogen auf die Strömungsrichtung des Testmediums M jeweils fluidtechnisch vorgeschalteten Block, nämlich dem Anschlussblock oder einem Erweiterungsblock, mechanisch, pneumatisch, hydraulisch und/oder elektrisch verbunden, um das Testmedium M, gegebenenfalls die Benetzungsflüssigkeit B und/oder Spülflüssigkeit und/oder die Druckluft, von diesem fluidtechnisch vorgeschalteten Block zugeleitet zu bekommen und/oder den Basisblock elektrisch anzuschließen.

Der Basisblock ist außerdem vorzugsweise ein Block, insbesondere der einzige Block, der an einem im Weiteren noch beschriebenen Träger 42, insbesondere Stativ 43, fixiert werden kann, um im installierten Zustand den Gesamtaufbau aus Blöcken zu halten. Vorzugsweise sind im installierten Zustand alle Blöcke vertikal übereinander gestapelt, wobei der Basisblock das untere Ende des Stapels bildet und die übrigen Blöcke trägt. In einem anderen, hier nicht dargestellten Ausführungsbeispiel können zusätzlich oder alternativ auch ein oder mehrere andere Blöcke, insbesondere der Anschlussblock und/oder mindestens ein Erweiterungsblock, an dem Träger 42, insbesondere Stativ 43, fixiert werden.

Ein Erweiterungsblock ist hier und vorzugsweise eine bauliche Einheit, die in ihrer Funktion im Wesentlichen einem Basisblock entspricht, mit dem Unterschied, dass der Erweiterungsblock nicht bezogen auf die Strömungsrichtung des Testmediums M fluidtechnisch am Ende der Gesamtheit aus allen Blöcken, sondern immer in einem Bereich zwischen einem Anschlussblock und einem Basisblock angeordnet ist, und auch keinen Fluidauslass 4a zum Ausleiten des filtrierten Testmediums F und/oder der Benetzungsflüssigkeit B und/oder der Spülflüssigkeit aus der Gesamtheit aller Blöcke und insbesondere auch keinen Fluidauslass 4b zur Ableitung von Flüssigkeitsresten beim Entlüften, Benetzen und/oder Entleeren aufweist. Ein Erweiterungsblock ist hier und vorzugsweise eine bauliche Einheit mit einem Gehäuse 34, in oder an dem ebenfalls mehrere für den Aufbau einer Filtrationsversuchsstrecke 2 notwendige Bauteile, z.B. ein oder mehrere Ventile 8, Sensoren 10 und/oder Leitungsabschnitte 17, funktionsfähig installiert sind und an dem auch ein austauschbarer Filter 6, 14, zu dem Versuchsdaten ermittelt werden sollen, fluidtechnisch angeschlossen werden kann.

Ein solcher Erweiterungsblock ist so ausgestaltet, dass im Bedarfsfall zur Erweiterung der Filtrationsversuchsstrecke 2, wenn also zu mehr als einem Filter 6, 14 Versuchsdaten ermittelt werden sollen, mehrere Einheiten bzw. "Blöcke", die mit einem Filter versehen werden können, mechanisch, pneumatisch, hydraulisch und/oder elektrisch über jeweils mindestens eine entsprechende Schnittstelle miteinander verbunden werden können. Über die Schnittstellen ist ein Erweiterungsblock im installierten Zustand mit dem bezogen auf die Strömungsrichtung des Testmediums M fluidtechnisch jeweils vorgeschalteten und nachgeschalteten Block mechanisch, pneumatisch, hydraulisch und/oder elektrisch verbunden. Damit kann dem Erweiterungsblock das Testmedium M, gegebenenfalls die Benetzungsflüssigkeit B und/oder Spülflüssigkeit und/oder die Druckluft, von dem fluidtechnisch vorgeschalteten Block zugeleitet werden und/oder der Erweiterungsblock elektrisch angeschlossen werden. Weiter kann das Testmedium M und gegebenenfalls die Benetzungsflüssigkeit B und/oder Spülflüssigkeit und/oder die Druckluft von dem Erweiterungsblock in den fluidtechnisch nachgeschalteten Block geleitet werden und/oder der fluidtechnisch nachgeschaltete Block elektrisch angeschlossen werden.

Grundsätzlich kann eine Filtrationsversuchsstrecke 2 einen oder mehrere Erweiterungsblöcke aufweisen. Bei dem Ausführungsbeispiel gemäß Fig. 3 und 4 sind beispielhaft zwei Erweiterungsblöcke vorgesehen. Die Gesamtheit aus einem oder mehreren Erweiterungsblöcken wird grundsätzlich von den anderen beiden Block-Typen eingefasst. So ist der Gesamtheit aus einem oder mehreren Erweiterungsblöcken bezogen auf die Strömungsrichtung des Testmediums M ein Anschlussblock fluidtechnisch vorgeschaltet und ein Basisblock fluidtechnisch nachgeschaltet. Eine Filtrationsversuchsstrecke 2 kann aber auch ohne einen Erweiterungsblock aufgebaut werden.

Bei dem Ausführungsbeispiel gemäß Fig. 3 und 4 ist es nun so, dass bei den beiden mittleren Montagemodulen 33 (Erweiterungsblöcke) mindestens ein Sensor 10, Ventil 8 und/oder Leitungsabschnitt 17 innerhalb des Gehäuses 34 angeordnet ist und/oder mindestens ein Filter 6, 14, insbesondere lösbar, außerhalb des Gehäuses 34 angeordnet ist. Der Filter 6, 14 ist so ohne Auseinandernehmen des Gehäuses 34 bzw. des Erweiterungsblocks zugänglich. Ein Filteraustausch kann insbesondere erfolgen, ohne das gesamte System auf- und abzubauen.

Bei dem Ausführungsbeispiel in Fig. 3 und 4 ist es ferner so, dass ein Montagemodul 33 (Basisblock), das hier ganz zuunterst angeordnet ist, stromabwärts, also nach unten hin, mit Ausnahme des Fluidauslasses 4a zum Ausleiten des filtrierten Testmediums F und/oder der Benetzungsflüssigkeit B und/oder der Spülflüssigkeit und mit Ausnahme des hier ebenfalls vorgesehenen Fluidauslasses 4b zur Ableitung von Flüssigkeitsresten beim Entlüften, Benetzen und/oder Entleeren keine weiteren Schnittstellen und/oder Auslässe aufweist. Im Übrigen hat der Basisblock vorzugsweise denselben Aufbau wie ein Erweiterungsblock.

Weiter ist bei diesem Ausführungsbeispiel vorgesehen, dass ein Montagemodul 33, das hier ganz zuoberst angeordnet ist, frei von Filtern ist (Anschlussblock). Der Anschlussblock unterscheidet sich von den anderen beiden Block-Typen hier und vorzugsweise auch insoweit, als er eine Pumpe, hier eine Pneumatikpumpe 24, mit der die Druckluft zum Leeren der Blöcke erzeugt werden kann, enthält.

Weiterhin weisen hier alle Montagemodule 33, insbesondere im Gehäuse 34, eine Elektronik mit mindestens einer elektrischen Platine 35, insbesondere einer Platine 35 mit einer integrierten Schaltung, auf, die zum Empfang von Sensordaten und/oder zur Steuerung mindestens eines der Ventile 8 und/oder der jeweiligen Pumpe, insbesondere der Hydraulikpumpe und/oder Pneumatikpumpe 24, dient. Die von der Elektronik bzw. den Platinen 35 und gegebenenfalls dem Steuergerät 22 gebildete Steuerelektronik bildet für das Filtrationsversuchssystem 1 vorzugsweise eine logische Abstraktionsebene, so dass beispielsweise mehrere Ventile 8 nicht als einzelne Aktoren im System auftauchen bzw. angesprochen werden müssen, sondern gemeinsam als Einheit angesprochen werden können. Vom Steuergerät 22 aus kann dann beispielsweise ein Befehl "Basisblock entleeren" gesendet werden. Die Elektronik bzw. Platine 35 im Basisblock löst den Befehl auf und steuert die notwendigen Ventile 8 im eigenen Block an.

Außerdem enthält die Elektronik eines Blocks insbesondere die Leistungselektronik, die für die Ventile 8 dieses Blocks notwendig ist.

Insbesondere kann über die jeweilige elektrische Platine 35 auch eine Umwandlung analoger in digitale Sensordaten und/oder, insbesondere vor dem Umwandeln, ein Verstärken der analogen Sensorsignale erfolgen.

Hier und vorzugsweise ist, wie Fig. 4 zeigt, ferner vorgesehen, dass jedem Montagemodul 33, an dem ein Filter 6, 14 anordenbar oder angeordnet ist, insbesondere jedem Gehäuse 34, an oder in dem ein Filter 6, 14 befestigbar oder befestigt ist, genau ein Filter 6, 14 zugeordnet ist.

Hier und vorzugsweise weist das jeweilige Montagemodul 33, insbesondere das Gehäuse 34, mindestens eine pneumatische Schnittstelle 36, mindestens eine hydraulische Schnittstelle 37 und/oder mindestens eine elektrische Schnittstelle 38 auf. Vorzugsweise sind jeweils zwei Montagemodule 33, insbesondere jeweils zwei Gehäuse 34, unmittelbar miteinander mechanisch verbindbar oder verbunden und insbesondere vertikal übereinander stapelbar oder gestapelt.

Durch ein mechanisches Verbinden, insbesondere unmittelbares mechanisches Verbinden, zweier Montagemodule 33 miteinander wird hier zwischen den Montagemodulen 33 mindestens eine pneumatische Verbindung 39, mindestens eine hydraulische Verbindung 40 und/oder mindestens eine elektrische Verbindung 41 durch Verbinden jeweils zweier zueinander korrespondierender der Schnittstellen 36, 37, 38 gebildet.

Im Folgenden werden anhand des Ausführungsbeispiels in Fig. 3 und 4 kurz die verschiedenen Phasen mit entsprechenden Ventil-Schaltstellungen beschrieben, die, hier vollautomatisch durch das Datenempfangsinstrument 18 in Form des Steuergeräts 22, im Rahmen eines Filtrationsversuches durchlaufen werden, nachdem der oder die Filter 6, 14, zu denen Versuchsdaten erzeugt werden sollen, eingebaut und angeschlossen worden sind. Durch die Automatisierung des Ablaufs ist eine gleichbleibende Qualität und ein vergleichbares Timing bei der Filtervorbereitung sichergestellt.

Grundsätzlich werden dabei alle Filter 6, 14 der einzelnen Blöcke, hier einzeln der Reihe nach vertikal von oben nach unten, also beginnend mit dem Filter 6, 14 am oberen Erweiterungsblock, gefolgt von dem Filter 6, 14 am unteren Erweiterungsblock, bis zu dem Filter 6, 14 am Basisblock, entlüftet und benetzt, dann entleert und dann mit dem Testmedium M gefüllt, wobei nochmal entlüftet wird. Im Anschluss erfolgt dann der eigentliche Filtrationsversuch. Schließlich werden die zuvor mit dem Testmedium M durchströmten Leitungsabschnitte 17 wieder entleert, damit bei einem Filterwechsel keine Flüssigkeit aus dem jeweiligen Block austreten kann.

Die zuvor genannten Schritte sollen nun im Weiteren beispielhaft für den oberen Erweiterungsblock im Detail beschrieben werden. Für die übrigen Blöcke werden diese Schritte entsprechend durchgeführt.

Dabei wird auf die in Fig. 4 mit "a" bis "e" bezeichneten Ventile 8, die hier als 3-Wege-Ventile ausgestaltet sind, Bezug genommen, nämlich:
das mit "a" bezeichnete Ventil 8 des Anschlussblocks, das einen Anschluss für einen zum Testmedium M enthaltenden Vorlagebehälter 3 führenden Leitungsabschnitt, einen Anschluss für einen zum Benetzungsflüssigkeit B, hier Wasser, enthaltenden Vorlagebehälter 3 führenden Leitungsabschnitt und einen Anschluss für einen zum mit "b" bezeichneten Ventil 8 führenden Leitungsabschnitt aufweist,
das mit "b" bezeichnete Ventil 8 des Anschlussblocks, das einen Anschluss für den zum Ventil "a" führenden Leitungsabschnitt, einen Anschluss für einen zu einer Druckluftquelle, hier Pneumatikpumpe 24, führenden Leitungsabschnitt und einen Anschluss für einen zum nächsten Filter 6, 14 des oberen Erweiterungsblocks führenden, zur Zuleitung des Testmedium M dienenden Leitungsabschnitt, aufweist,
das mit "c" bezeichnete Ventil 8 des oberen Erweiterungsblocks, das einen Anschluss für einen vom Filter 6, 14 wegführenden, zur Entlüftung dienenden Leitungsabschnitt, einen Anschluss für einen Leitungsabschnitt einer Ablassleitung, die zum Fluidauslass 4a und/oder Fluidauslass 4b führt und zur Ableitung von Flüssigkeitsresten beim Entlüften, Benetzen und/oder Entleeren dient, und einen Anschluss für einen Leitungsabschnitt, der hier funktionslos ist und mit einem weiteren Leitungsabschnitt der Ablassleitung in einem hier nicht vorgesehenen vorgelagerten Erweiterungsblock verbindbar ist, aufweist,
das mit "d" bezeichnete Ventil 8 des oberen Erweiterungsblocks, das einen Anschluss für einen vom Filter 6, 14 wegführenden, zur Ableitung des Testmediums M dienenden Leitungsabschnitt, einen Anschluss für einen zu der Druckluftquelle führenden Leitungsabschnitt und einen Anschluss für einen zum mit "e" bezeichneten Ventil 8 führenden Leitungsabschnitt aufweist, und
das mit "e" bezeichnete Ventil 8 des oberen Erweiterungsblocks, das einen Anschluss für den zum Ventil "d" führenden Leitungsabschnitt, einen Anschluss für einen zum nächsten Filter 6, 14 des unteren Erweiterungsblocks führenden, zur Zuleitung des Testmedium M dienenden Leitungsabschnitt und einen Anschluss für einen Leitungsabschnitt, der zur Ablassleitung führt, aufweist.

Die mit "c" bis "e" bezeichneten Ventile 8 sind hier in den Erweiterungsblöcken und im Basisblock funktionsgleich, wobei aber im Basisblock anstelle eines Leitungsabschnitts zu einem weiteren Filter 6, 14 ein Leitungsabschnitt zum Fluidauslass 4a vorgesehen ist.

Der hier vollautomatische Ablauf wird nun beispielhaft für den oberen Erweiterungsblock beschrieben, wobei dieser Ablauf, jedenfalls im Wesentlichen, derselbe für den unteren Erweiterungsblock und den Basisblock ist.

Im Einzelnen wird nun der Filter 6, 14 des oberen Erweiterungsblocks zunächst jeweils mit der Benetzungsflüssigkeit B, hier beispielsweise Wasser, gefüllt und dabei entlüftet. Dazu ist das Ventil "a" zum Testmedium M enthaltenden Vorlagebehälter 3 hin geschlossen, zum Benetzungsflüssigkeit B enthaltenden Vorlagebehälter 3 hin geöffnet und zum Ventil "b" hin geöffnet. Weiter ist das Ventil "b" zum Ventil "a" hin geöffnet, zur Druckluftquelle hin geschlossen und zum nächsten Filter 6, 14 des oberen Erweiterungsblocks hin geöffnet. Weiter ist das Ventil "c" zum Filter 6, 14 des oberen Erweiterungsblocks hin geöffnet, zum Fluidauslass 4a und/oder Fluidauslass 4b hin geöffnet und zum hier funktionslosen Leitungsabschnitt der Ablassleitung hin geschlossen. Weiter ist das Ventil "d" zum Filter 6, 14 hin geöffnet, zur Druckluftquelle hin geschlossen und zum Ventil "e" hin geöffnet. Schließlich ist das Ventil "e" zum Ventil "d" hin geöffnet, zum nächsten Filter 6, 14 des unteren Erweiterungsblocks hin geschlossen und zur Ablassleitung bzw. darüber zum Fluidauslass 4a und/oder Fluidauslass 4b hin geöffnet. Nun wird Benetzungsflüssigkeit B durch den Filter 6, 14 und die entsprechenden Leitungsabschnitte gepumpt und über die Ablassleitung durch den jeweiligen Fluidauslass, hier den Fluidauslass 4b, abgeführt, hier ohne dabei durch den nächsten Filter 6, 14 geleitet zu werden. Das Ventil "e" des Basisblocks ist dabei zum Fluidauslass 4a und zum Ventil "d" hin insbesondere geschlossen.

Dann wird der Filter 6, 14 des oberen Erweiterungsblocks, nachdem das Entlüften für alle Filter 6, 14 durchgeführt worden ist, benetzt, hier auch mit Wasser. Dazu ist das Ventil "a" zum Testmedium M enthaltenden Vorlagebehälter 3 hin geschlossen, zum Benetzungsflüssigkeit B enthaltenden Vorlagebehälter 3 hin geöffnet und zum Ventil "b" hin geöffnet. Weiter ist das Ventil "b" zum Ventil "a" hin geöffnet, zur Druckluftquelle hin geschlossen und zum nächsten Filter 6, 14 des oberen Erweiterungsblocks hin geöffnet. Weiter ist das Ventil "c" zum Filter 6, 14 des oberen Erweiterungsblocks hin geschlossen. Weiter ist das Ventil "d" zum Filter 6, 14 hin geöffnet, zur Druckluftquelle hin geschlossen und zum Ventil "e" hin geöffnet. Schließlich ist das Ventil "e" zum Ventil "d" hin geöffnet, zum nächsten Filter 6, 14 des unteren Erweiterungsblocks hin geschlossen und zur Ablassleitung bzw. darüber zum Fluidauslass 4a und/oder Fluidauslass 4b hin geöffnet. Nun wird Benetzungsflüssigkeit B durch den Filter 6, 14 und die entsprechenden Leitungsabschnitte gepumpt und über die Ablassleitung durch den jeweiligen Fluidauslass, hier den Fluidauslass 4b, abgeführt, hier ohne dabei durch den nächsten Filter 6, 14 geleitet zu werden. Das Ventil "e" des Basisblocks ist dabei zum Fluidauslass 4a und zum Ventil "d" hin insbesondere geschlossen.

Dann wird der Filter 6, 14 des oberen Erweiterungsblocks, nachdem das Benetzen für alle Filter 6, 14 durchgeführt worden ist, entleert, wobei auch die später mit dem Testmedium M durchströmten Leitungsabschnitte 17 des Fluidleitungsnetzwerks 16 entleert werden, um eine Verdünnung des Testmediums M zu verhindern. Dazu ist das Ventil "a" zum Testmedium M enthaltenden Vorlagebehälter 3 hin und zum Benetzungsflüssigkeit B enthaltenden Vorlagebehälter 3 hin geschlossen. Weiter ist das Ventil "b" zur Druckluftquelle hin und zum nächsten Filter 6, 14 des oberen Erweiterungsblocks hin geöffnet. Weiter ist das Ventil "c" zum Filter 6, 14 des oberen Erweiterungsblocks hin geöffnet, zum Fluidauslass 4a und/oder Fluidauslass 4b hin geöffnet und zum hier funktionslosen Leitungsabschnitt der Ablassleitung hin geschlossen. Weiter ist das Ventil "d" zum Filter 6, 14 hin geöffnet, zur Druckluftquelle hin geschlossen und zum Ventil "e" hin geöffnet. Schließlich ist das Ventil "e" zum Ventil "d" hin geöffnet, zum nächsten Filter 6, 14 des unteren Erweiterungsblocks hin geöffnet und zur Ablassleitung bzw. darüber zum Fluidauslass 4a und/oder Fluidauslass 4b hin geschlossen. Nun wird über die Druckluftquelle Druckluft durch den Filter 6, 14 und die entsprechenden Leitungsabschnitte transportiert und Reste der Benetzungsflüssigkeit B werden über die Ablassleitung durch den jeweiligen Fluidauslass, hier den Fluidauslass 4b, abgeführt. Das Ventil "e" des Basisblocks ist dabei zum Fluidauslass 4a und zum Ventil "d" hin insbesondere geschlossen.

Das Prozedere "Entleeren" wird schließlich noch auf gleiche Weise zunächst für den Filter 6, 14 des unteren Erweiterungsblocks und dann für den Filter 6, 14 des Basisblocks durchgeführt. Auch hier ist jeweils bei dem Block, dessen Filter 6, 14 nun entleert wird, das Ventil "c" zum Filter 6, 14 hin geöffnet, zum Fluidauslass 4a und/oder Fluidauslass 4b hin geöffnet und zum jeweils fluidtechnisch vorgeschalteten Block führenden Leitungsabschnitt der Ablassleitung hin geschlossen. Weiter ist jeweils beim fluidtechnisch vorgeschalteten Block das Ventil "d" zum Filter 6, 14 hin geschlossen, zur Druckluftquelle hin geöffnet und zum Ventil "e" hin geöffnet. Weiter ist jeweils bei dem Block, dessen Filter 6, 14 nun entleert wird, das Ventil "d" zum Filter 6, 14 hin geöffnet, zur Druckluftquelle hin geschlossen und zum Ventil "e" hin geöffnet. Schließlich ist jeweils bei dem Block, dessen Filter 6, 14 nun entleert wird, das Ventil "e" zum Ventil "d" hin geöffnet. Im Fall des unteren Erweiterungsblocks ist das Ventil "e" außerdem zum nächsten Filter 6, 14 des Basisblocks hin geöffnet und zur Ablassleitung bzw. darüber zum Fluidauslass 4a und/oder Fluidauslass 4b hin geschlossen. Im Fall des Basisblocks ist das Ventil "e" hier zum Fluidauslass 4b hin geöffnet und zum Fluidauslass 4a hin insbesondere geschlossen.

Dann wird der Filter 6, 14 des oberen Erweiterungsblocks, nachdem das Entleeren für alle Filter 6, 14 und Leitungsabschnitte 17 durchgeführt worden ist, mit dem Testmedium M gefüllt und dabei entlüftet. Dazu ist das Ventil "a" zum Testmedium M enthaltenden Vorlagebehälter 3 hin geöffnet, zum Benetzungsflüssigkeit B enthaltenden Vorlagebehälter 3 hin geschlossen und zum Ventil "b" hin geöffnet. Weiter ist das Ventil "b" zum Ventil "a" hin geöffnet, zur Druckluftquelle hin geschlossen und zum nächsten Filter 6, 14 des oberen Erweiterungsblocks hin geöffnet. Weiter ist das Ventil "c" zum Filter 6, 14 des oberen Erweiterungsblocks hin geöffnet, zum Fluidauslass 4a und/oder Fluidauslass 4b hin geöffnet und zum hier funktionslosen Leitungsabschnitt der Ablassleitung hin geschlossen. Weiter ist das Ventil "d" zum Filter 6, 14 hin geöffnet, zur Druckluftquelle hin geschlossen und zum Ventil "e" hin geöffnet. Schließlich ist das Ventil "e" zum Ventil "d" hin geöffnet, zum nächsten Filter 6, 14 des unteren Erweiterungsblocks hin geschlossen und zur Ablassleitung bzw. darüber zum Fluidauslass 4a und/oder Fluidauslass 4b hin geöffnet. Nun wird Testmedium M durch den Filter 6, 14 und die entsprechenden Leitungsabschnitte gepumpt und über die Ablassleitung durch den jeweiligen Fluidauslass, hier den Fluidauslass 4b, abgeführt, hier ohne dabei durch den nächsten Filter 6, 14 geleitet zu werden. Das Ventil "e" des Basisblocks ist dabei zum Fluidauslass 4a und zum Ventil "d" hin insbesondere geschlossen.

Dann wird, nachdem der Filter 6, 14 des oberen Erweiterungsblocks mit dem Testmedium M gefüllt und dabei entlüftet worden ist, das Ventil "c" zum Filter 6, 14 des oberen Erweiterungsblocks hin geschlossen. Dabei wird weiter Testmedium M durch den Filter 6, 14 und die entsprechenden Leitungsabschnitte gepumpt und über die Ablassleitung durch den jeweiligen Fluidauslass, hier den Fluidauslass 4b, abgeführt. Danach wird das Ventil "e" zum Filter 6, 14 des unteren Erweiterungsblocks hin geöffnet und zur Ablassleitung bzw. darüber zum Fluidauslass 4a und/oder Fluidauslass 4b hin geschlossen, um diesen Filter 6, 14 zu füllen und zu entlüften. Nachdem dieser entlüftet ist, wird auch im unteren Erweiterungsblock das Ventil "c" zum Filter 6, 14 hin geschlossen, wobei weiter Testmedium M durch den Filter 6, 14 und die entsprechenden Leitungsabschnitte gepumpt und über die Ablassleitung durch den jeweiligen Fluidauslass, hier den Fluidauslass 4b, abgeführt wird. Das Prozedere "Füllen und Entlüften" wird schließlich noch auf gleiche Weise für den Basisblock durchgeführt. Auch hier wird das Ventil "c" zum Filter 6, 14 hin geschlossen, wobei weiter Testmedium M durch den Filter 6, 14 und die entsprechenden Leitungsabschnitte gepumpt und über die Ablassleitung durch den jeweiligen Fluidauslass, hier den Fluidauslass 4b, abgeführt wird. Das Ventil "e" des Basisblocks ist dabei zum Fluidauslass 4a insbesondere geschlossen.

Nun erfolgt der eigentliche Filtrationsversuch. Dazu ist das Ventil "a" zum Testmedium M enthaltenden Vorlagebehälter 3 hin geöffnet, zum Benetzungsflüssigkeit B enthaltenden Vorlagebehälter 3 hin geschlossen und zum Ventil "b" hin geöffnet. Weiter ist das Ventil "b" zum Ventil "a" hin geöffnet, zur Druckluftquelle hin geschlossen und zum nächsten Filter 6, 14 des oberen Erweiterungsblocks hin geöffnet. Weiter ist das Ventil "c" zum Filter 6, 14 des oberen Erweiterungsblocks hin geschlossen. Weiter ist das Ventil "d" zum Filter 6, 14 hin geöffnet, zur Druckluftquelle hin geschlossen und zum Ventil "e" hin geöffnet. Schließlich ist das Ventil "e" zum Ventil "d" hin geöffnet, zum nächsten Filter 6, 14 des unteren Erweiterungsblocks hin geöffnet und zur Ablassleitung bzw. darüber zum Fluidauslass 4a und/oder Fluidauslass 4b hin geschlossen. Dieselbe Schaltstellung haben auch im unteren Erweiterungsblock und im Basisblock die funktionsgleichen Ventile "c" bis "e" inne. Nun wird Testmedium M durch die Filter 6, 14 und die entsprechenden Leitungsabschnitte gepumpt und durch den Fluidauslass 4a abgeführt. Das Ventil "e" des Basisblocks ist hier zum Fluidauslass 4b hin geschlossen.

Nachdem der Filtrationsversuch beendet ist, werden schließlich der Filter 6, 14 des oberen Erweiterungsblocks und danach entsprechend auch einzeln die weiteren Filter 6, 14 entleert. Zum Entleeren des Filters 6, 14 des oberen Erweiterungsblocks ist das Ventil "a" zum Testmedium M enthaltenden Vorlagebehälter 3 hin und zum Benetzungsflüssigkeit B enthaltenden Vorlagebehälter 3 hin geschlossen. Weiter ist das Ventil "b" zur Druckluftquelle hin und zum nächsten Filter 6, 14 des oberen Erweiterungsblocks hin geöffnet. Weiter ist das Ventil "c" zum Filter 6, 14 des oberen Erweiterungsblocks hin geöffnet, zum Fluidauslass 4a und/oder Fluidauslass 4b hin geöffnet und zum hier funktionslosen Leitungsabschnitt der Ablassleitung hin geschlossen. Weiter ist das Ventil "d" zum Filter 6, 14 hin geöffnet, zur Druckluftquelle hin geschlossen und zum Ventil "e" hin geöffnet. Schließlich ist das Ventil "e" zum Ventil "d" hin geöffnet, zum nächsten Filter 6, 14 des unteren Erweiterungsblocks hin geöffnet und zur Ablassleitung bzw. darüber zum Fluidauslass 4a und/oder Fluidauslass 4b hin geschlossen. Nun wird über die Druckluftquelle Druckluft durch den Filter 6, 14 und die entsprechenden Leitungsabschnitte transportiert und Reste des Testmediums M werden über die Ablassleitung durch den jeweiligen Fluidauslass, hier den Fluidauslass 4b, abgeführt. Das Ventil "e" des Basisblocks ist dabei zum Fluidauslass 4a hin insbesondere geschlossen.

Das Prozedere "Entleeren" wird schließlich noch, wie dies bereits zuvor für das Entleeren nach dem Benetzen beschrieben wurde, zunächst für den Filter 6, 14 des unteren Erweiterungsblocks und dann für den Filter 6, 14 des Basisblocks durchgeführt. Nachdem das Entleeren für alle Filter 6, 14 durchgeführt worden ist, können die Filter 6, 14 entnommen werden.

Im Anschluss kann, mit neuen Filtern 6, 14, der obige Ablauf auf dieselbe Weise erneut durchlaufen werden.

Alternativ kann die Filtrationsversuchsstrecke 2 gereinigt werden. Dazu werden anstelle der Filter 6, 14 Leer-Röhrchen eingesetzt. Grundsätzlich können dann in einer hier nicht dargestellten Ausführung dieselben Schritte wie beim Entlüften und anschließenden Benetzen durchgeführt werden, jedoch mit einer Reinigungsflüssigkeit anstelle der Benetzungsflüssigkeit B. Hier und vorzugsweise ist es jedoch so, dass im Unterschied zum zuvor beschriebenen Entlüften das Ventil "d" zur Druckluftquelle hin nicht geschlossen, sondern geöffnet ist, und insbesondere das Ventil "d" zum Filter 6, 14 hin nicht geöffnet, sondern geschlossen ist.

Hier und vorzugsweise ist ferner vorgesehen, dass das Filtrationsversuchssystem 1 mindestens einen Träger 42 aufweist. Ein solcher kann auf unterschiedliche Weise genutzt werden. Gemäß Fig. 1 ist nur der Vorlagebehälter 3, insbesondere der Vorlagebehälter 3 für das Testmedium M, an dem Träger 42 fixierbar oder fixiert. Gemäß Fig. 2 sind an einem plattenförmigen, ersten Träger 42 nur ein oder mehrere Sensoren 10, 11, 12 der Sensoranordnung 9 und an einem balkenförmigen, weiteren Träger 42 der Vorlagebehälter 3, insbesondere der Vorlagebehälter 3 für das Testmedium M, fixierbar oder fixiert. Gemäß Fig. 3 und 4 sind ein oder mehrere Montagemodule 33 sowie zwei Vorlagebehälter 3, insbesondere der Vorlagebehälter 3 für das Testmedium M und der Vorlagebehälter 3 für die Benetzungsflüssigkeit B und/oder Spülflüssigkeit, jeweils an dem gemeinsamen Träger 42 fixierbar oder fixiert.

Der Träger 42 ist beispielsweise ein Stativ 43 mit einem, insbesondere höhenverstellbaren, Halter 44, wie in den Ausführungsbeispielen der Fig. 1 sowie der Fig. 3 und 4 dargestellt.

Es ist aber auch, wie in Fig. 2 dargestellt, denkbar, dass der Träger 42 eine, insbesondere an einem Stativ 43 befestigte, Montageplatte 45, vorzugsweise aus Metall, ist, an der mehrere Sensoren 10, 11, 12 der Sensoranordnung 9 jeweils, insbesondere lösbar, fixierbar oder fixiert sind. Vorzugsweise erfolgt die Fixierung der Sensoren 10, 11, 12 an der Montageplatte 45 magnetisch, formschlüssig und/oder kraftschlüssig. Besonders bevorzugt weisen die Sensoren 10, bei denen es sich hier um Drucksensoren 11 handelt, einen Befestigungsabschnitt 46 auf, der vorzugsweise einen Magneten 47 aufweist. Alternativ oder zusätzlich kann der Befestigungsabschnitt 46 auch ein Steck- oder Klemmelement aufweisen, das mit einem korrespondierenden Gegenstück an der Montageplatte 45 formschlüssig und/oder kraftschlüssig zusammenwirkt.

Ein solcher Aufbau hat den Vorteil, dass die Einheit aus Montageplatte 45 und daran befestigten Bauteilen der Filtrationsversuchsstrecke 2 unabhängig von dem jeweiligen Vorlagebehälter 3 befestigbar und höheneinstellbar ist. Die Höhe des Filtrationsversuchssystems 1 kann dadurch minimiert werden.

Die Sensoren 10, 11, 12 sind hier und vorzugsweise als für die Anbringung an der Montageplatte 45 vorgefertigte Module aufgebaut, die neben dem Befestigungsabschnitt 46 auch einen Durchflusskanal für das Testmedium M, der hier zur Druckmessung dient, und eine Halterung für den oder die Filter 6, 14 aufweisen. Im montierten Zustand wird hier zwischen zwei an der Montageplatte 45 fixierten Sensoren 10, 11, 12 jeweils ein Filter 6, 14 gehalten, der nicht selbst an der Montageplatte 45 fixiert ist. Es sei hervorgehoben, dass in einem anderen, hier nicht dargestellten Ausführungsbeispiel grundsätzlich an einer solchen Montageplatte 45 auf dieselbe Weise auch Volumenstromsensoren 12 vorgesehen werden können.

Die Montageplatte 45 ist hier und vorzugsweise Bestandteil eines Gehäuses eines Datenempfangsinstruments 18, 23 (Sensor-Hub), insbesondere des Datenempfangsinstruments 18, 23, das eingerichtet ist, als Verarbeitung der Sensordaten ein Bündeln der Sensordaten zu Datenpaketen und Versenden der Datenpakete und/oder ein Umwandeln von analogen Sensordaten in digitale Sensordaten und/oder, insbesondere vor dem Umwandeln, ein Verstärken der analogen Sensorsignale durchzuführen. Durch das Bündeln der Sensordaten zu Datenpaketen verläuft hier und vorzugsweise nur ein einzelnes Datenkabel 27 zur Übertragung von Sensordaten zu dem Steuergerät 22. Ein weiterer Vorteil ist, dass im Falle von analogen Sensoren 10, 11, 12 die Datenkabel vom Sensor 10, 11, 12 zur digitalisierenden Schaltung kurz sein können und damit weniger anfällig für Störungen sind.

Weiter sind hier und vorzugsweise als Datenschnittstellen 29 mehrere Dateneingänge 29a für die Sensoren 10, 11, 12 und mindestens ein Datenausgang 29b für das Datenkabel 27 zur Übertragung der Sensordaten zu dem Steuergerät 22 am Sensor-Hub 23 vorgesehen. Vorzugsweise ist die Anzahl an Datenausgängen 29b kleiner als die Anzahl an Dateneingängen 29a. Hier und vorzugsweise ist nur ein einzelner Datenausgang 29b vorgesehen.

Wie in Fig. 2 dargestellt ist, können die Dateneingänge 29a an der Montageplatte 45 bzw. dem Gehäuse des Sensor-Hubs 23 in einer Reihe angeordnet sein, hier vertikal von oben nach unten. Vorzugsweise ist es dann so, dass dadurch auch die Reihenfolge der angeschlossenen Sensoren 10, 11, 12 in der Filtrationsversuchsstrecke 2 vorgegeben ist. Ein Sensor 10, 11, 12, der an einem höher gelegenen Dateneingang 29a angeschlossen ist, muss beispielsweise in der Filtrationsversuchsstrecke 2 weiter vorne positioniert sein. Der Sensor-Hub 23 kann insbesondere die Sensordaten mit der Position des Dateneingangs 29a kennzeichnen, so dass das Steuergerät 22 die empfangenen Sensordaten in der richtigen Reihenfolge verarbeiten und/oder aufzeichnen kann.

Der Sensor-Hub 23 ist dabei insbesondere so eingerichtet, dass die ausschließliche Datenstromrichtung von den Sensoren 10, 11, 12 über den Sensor-Hub 23 zu dem Steuergerät 22 verläuft.

Bei den Ausführungsbeispielen der Fig. 2 bis 4 ist es schließlich ferner so, dass der jeweilige Träger 42 und/oder das jeweilige Stativ 43 mechanisch mit dem Gehäuse einer Waage 20 der Wägeanordnung 19 verbunden ist. Über die Waage 20 lässt sich bei einem Filtrationsversuch das Gewicht des Filtrats F in dem Auffangbehälter 5 über die Zeit und daraus der Volumenstrom in der Filtrationsversuchsstrecke 2 bestimmen. Grundsätzlich kann aber auch wie in Fig. 1 ein Volumenstromsensor 10, 12 eingesetzt werden, wobei dann auf eine Waage verzichtet werden kann. Ein Vorteil einer solchen Waage 20 ist auch, dass diese relativ schwer ist und dadurch einen guten Fuß für den Träger 42 und/oder das Stativ 43 bildet. Das reduziert die Anzahl der Bauteile und das Gesamtwicht des zu transportierenden Filtrationsversuchssystems 1 für den Fall, dass man eine Waage 20 benutzt. Eine Waage 20 hat auch den Vorteil, dass sie weitgehend unabhängig von der Viskosität der Flüssigkeit als Volumenstromsensor funktionieren kann. "Richtige" Volumenstromsensoren sind bezüglich der Viskosität typischerweise sensibel, bzw. erlauben den Betrieb nur mit wässrigen Lösungen.

Eine weitere Lehre, die nicht Gegenstand der Erfindung ist, betrifft ein Datenempfangsinstrument 18, 21, 22, 23 zur Verwendung in einem bioprozesstechnischen, insbesondere biopharmazeutischen, Filtrationsversuchssystem 1 zum Filtrieren eines flüssigen Testmediums M im Rahmen eines Filtrationsversuchs in einer Filtrationsversuchsstrecke 2 des Filtrationsversuchssystems 1, die von einem Vorlagebehälter 3 zur Aufnahme des zu filtrierenden Testmediums M zu einem Fluidauslass 4 für das filtrierte Testmedium F führt, wobei das Datenempfangsinstrument 18, 21, 22, 23 eingerichtet ist, im Rahmen des Filtrationsversuchs erzeugte Sensordaten einer Sensoranordnung 9 als Versuchsdaten zu mindestens einem Filter 6 zu empfangen, insbesondere auch zu erfassen und/oder zu verarbeiten, auf deren Basis der Filter eines Zielsystems nach vorbestimmten Skalierungskriterien auswählbar und/oder dimensionierbar ist. Es darf insoweit auf die Ausführungen zu dem vorschlagsgemäßen bioprozesstechnischen Filtrationsversuchssystem verwiesen werden.

Wesentlich ist dabei, dass das Datenempfangsinstrument 18, 21, 22, 23 betreffend den Empfang von Sensordaten der Sensoranordnung 9 programmier- und/oder schaltungstechnisch vorkonfektioniert ist.

Eine weitere Lehre, die nicht Gegenstand der Erfindung ist, betrifft eine Verwendung eines verpackten Filtrationsversuchssatzes aus vorkonfektionierten Anlagenkomponenten für den Aufbau eines vorschlagsgemäßen bioprozesstechnischen, insbesondere biopharmazeutischen, Filtrationsversuchssystems 1. Es darf insoweit auf die Ausführungen zu dem vorschlagsgemäßen bioprozesstechnischen Filtrationsversuchssystem verwiesen werden.

Wesentlich ist dabei, dass der Filtrationsversuchssatz in der Verpackung mindestens ein Montagemodul 33 aus mindestens einem Leitungsabschnitt 17 des Fluidleitungsnetzwerks 16, der mit mindestens einem Sensor 10, 11, 12 der Sensoranordnung 9 und/oder mindestens einem Ventil 8 der Ventilanordnung 7 bestimmungsgemäß verbunden ist, aufweist. In einer hier nicht dargestellten Ausführungsform kann grundsätzlich auch noch mindestens ein Filter 6, 14, 15 der Filteranordnung 13 in der Verpackung enthalten sein. Auch kann ein Vorlagebehälter 3, der vorzugsweise mit dem Leitungsabschnitt 17 fluidtechnisch verbunden ist, als Teil des Montagemoduls 33 vorgesehen sein.

## Patentansprüche

1. Anordnung aufweisend ein bioprozesstechnisches, insbesondere biopharmazeutisches, Filtrationsversuchssystem zum Filtrieren eines flüssigen Testmediums (M) im Rahmen eines Filtrationsversuchs in einer Filtrationsversuchsstrecke (2) des Filtrationsversuchssystems (1), die von einem Vorlagebehälter (3) zur Aufnahme des zu filtrierenden Testmediums (M) zu einem Fluidauslass (4) für das filtrierte Testmedium (F) führt, wobei das Filtrationsversuchssystem (1) eingerichtet ist, im Rahmen des Filtrationsversuchs Sensordaten als Versuchsdaten zu mindestens einem Filter (6) zu ermitteln, auf deren Basis der Filter eines Zielsystems nach vorbestimmten Skalierungskriterien ausgewählt und/oder dimensioniert wird,
**dadurch gekennzeichnet,**
**dass** das Filtrationsversuchssystem (1) zumindest teilweise programmier- und/oder schaltungstechnisch vorkonfektioniert ist und mindestens ein Datenempfangsinstrument (18, 21, 22, 23) zum Empfang von Sensordaten der Sensoranordnung (9) aufweist, welches betreffend den Empfang und/oder die Erfassung und/oder Verarbeitung von Sensordaten der Sensoranordnung (9) programmier- und/oder schaltungstechnisch vorkonfektioniert und somit versuchsspezifisch bereitgestellt ist, dass das Datenempfangsinstrument (18, 21, 22, 23) dazu eingerichtet ist, die Sensordaten aufzuzeichnen, und dass die Anordnung ein Datenverarbeitungs- und/oder -auswertegerät aufweist, das dazu eingerichtet ist, nach vorbestimmten Skalierungskriterien zu dem jeweiligen Filter (6, 14) der Filtrationsversuchsstrecke (2) einen entsprechenden Filter eines Zielsystems auszuwählen und/oder zu dimensionieren.

2. Anordnung nach Anspruch 1, **dadurch gekennzeichnet, dass** das Filtrationsversuchssystem (1), insbesondere die Filtrationsversuchsstrecke (2), eine Ventilanordnung (7) mit einem oder mehreren Ventilen (8), eine Sensoranordnung (9) mit einem oder mehreren Sensoren (10, 11, 12), insbesondere einem oder mehreren Druck- (11), Volumenstrom- (12) und/oder Temperatursensoren, eine Filteranordnung (13) mit einem oder mehreren Filtern (6, 14, 15), insbesondere einem oder mehreren Flüssigkeits- (14) und/oder Luftfiltern (15), und/oder ein Fluidleitungsnetzwerk (16) mit mehreren Leitungsabschnitten (17), über die das Testmedium (M) zu dem jeweiligen Filter (6, 14, 15) gelangt, aufweist, und/oder, dass das Filtrationsversuchssystem (1) eine Wägeanordnung (19) mit einer Waage (20) aufweist.

3. Anordnung nach Anspruch 1 oder 2, **dadurch gekennzeichnet, dass** die Verarbeitung der Sensordaten ein Vergleichen von Sensordaten mit mindestens einem Sollwert oder Sollwertebereich und/oder ein Bündeln von Sensordaten zu Datenpaketen und Versenden der Datenpakete und/oder ein Umwandeln von analogen Sensordaten in digitale Sensordaten und/oder, insbesondere vor dem Umwandeln, ein Verstärken der analogen Sensorsignale umfasst.

4. Anordnung nach einem der vorhergehenden Ansprüche, **dadurch gekennzeichnet, dass** das Filtrationsversuchssystem (1) mindestens eine Pumpe, insbesondere Hydraulikpumpe und/oder Pneumatikpumpe (24), und/oder mindestens einen pneumatischen Druckregler (R) aufweist und dass mindestens ein Datenempfangsinstrument (18, 22) betreffend die Steuerung der Pumpe und/oder des pneumatischen Druckreglers (R) programmier- und/oder schaltungstechnisch vorkonfektioniert ist, vorzugsweise, dass die Pumpe und/oder der pneumatische Druckregler (R) derart steuerbar ist, dass ein vorgegebener, konstanter oder variierender, Druck oder Volumenstrom des Testmediums (M) in der Filtrationsversuchsstrecke (2) und/oder ein definierter, konstanter oder variierender, Druck oder Volumenstrom einer Benetzungsflüssigkeit (B), insbesondere bei einem automatischen Filterbenetzungsvorgang, in der Filtrationsversuchsstrecke (2) und/oder ein definierter, konstanter oder variierender, Druck oder Volumenstrom der Druckluft und/oder einer Spülflüssigkeit, insbesondere bei einem automatischen Entleer- und/oder Spülvorgang, in der Filtrationsversuchsstrecke (2) erzeugbar ist.

5. Anordnung nach einem der vorhergehenden Ansprüche, **dadurch gekennzeichnet, dass** mindestens ein Datenempfangsinstrument (18, 22) betreffend die Steuerung mindestens eines Ventils (8) der Ventilanordnung (7) programmier- und/oder schaltungstechnisch vorkonfektioniert ist, insbesondere betreffend die Steuerung bei einem Filterbenetzungsvorgang, bei einem Filterentlüftungsvorgang, bei einem Filtrationsversuch mit dem Testmedium (M) und/oder bei einem Entleer- und/oder Spülvorgang.

6. Anordnung nach einem der vorhergehenden Ansprüche, **dadurch gekennzeichnet, dass** das mindestens eine Datenempfangsinstrument (18, 21, 22, 23) eine Spannungsversorgung (28), mindestens eine Datenschnittstelle (29), einen Speicher (30) zum Speichern von Sensorrohdaten und/oder von verarbeiteten Sensordaten, einen pneumatischen Einlass (31), mindestens einen pneumatischen Auslass (32), einen pneumatischen Druckregler (R) und/oder mindestens eine Pneumatikpumpe (24) aufweist, vorzugsweise,
dass das jeweilige Datenempfangsinstrument (18, 21, 22, 23) frei von hydraulischen Anschlüssen ist und insbesondere räumlich beabstandet zu der Filtrationsversuchsstrecke (2) anordenbar oder angeordnet ist.

7. Anordnung nach einem der vorhergehenden Ansprüche, **dadurch gekennzeichnet, dass** das Filtrationsversuchssystem (1), insbesondere die Filtrationsversuchsstrecke (2) und/oder die Sensoranordnung (9), betreffend das Messprinzip, die Spezifikationen und/oder die Einbaulage mindestens eines Sensors (10, 11, 12) der Sensoranordnung (9) sensortechnisch vorkonfektioniert ist, und/oder,
dass das Filtrationsversuchssystem (1), insbesondere die Filtrationsversuchsstrecke (2) und/oder die Filteranordnung (13), betreffend das Funktionsprinzip, die Spezifikationen und/oder die Einbaulage mindestens eines Filters (6, 14, 15) der Filteranordnung (13) fluidtechnisch vorkonfektioniert ist, und/oder,
dass das Filtrationsversuchssystem (1), insbesondere die Filtrationsversuchsstrecke (2) und/oder die Ventilanordnung (7), betreffend die Betätigungsart, die Spezifikationen und/oder die Einbaulage mindestens eines Ventils (8) der Ventilanordnung (7) fluidtechnisch vorkonfektioniert ist, und/oder,
dass das Filtrationsversuchssystem (1), insbesondere die Filtrationsversuchsstrecke (2) und/oder das Fluidleitungsnetzwerk (16), betreffend die Spezifikationen und/oder die Einbaulage mindestens eines Leitungsabschnitts (17) des Fluidleitungsnetzwerks (16) fluidtechnisch vorkonfektioniert ist.

8. Anordnung nach einem der vorhergehenden Ansprüche, **dadurch gekennzeichnet, dass** mindestens ein Sensor (10, 11, 12) der Sensoranordnung (9), mindestens ein Filter (6, 14, 15) der Filteranordnung (13), mindestens ein Ventil (8) der Ventilanordnung (7) und/oder mindestens ein Vorlagebehälter (3) zusammen mit mindestens einem Leitungsabschnitt (17) des Fluidleitungsnetzwerks (16) ein fluidtechnisch und/oder sensortechnisch vorkonfektioniertes Montagemodul (33) bilden, wobei insbesondere das Montagemodul (33) oder mehrere solche Montagemodule (33) die Filtrationsversuchsstrecke (2) bilden, vorzugsweise,
dass das jeweilige Montagemodul (33) den Vorlagebehälter (3) für das Testmedium (M) und/oder einen Vorlagebehälter (3) für Benetzungs- (B) und/oder Spülflüssigkeit aufweist, und/oder,
dass mindestens ein Montagemodul (33) einen Fluidauslass (4) zum Ausleiten des filtrierten Testmediums (F) in einen Auffangbehälter (5) des Filtrationsversuchssystems (1) aufweist.

9. Anordnung nach Anspruch 8, **dadurch gekennzeichnet, dass** das jeweilige Montagemodul (33) ein Gehäuse (34), insbesondere Kunststoff-, Harz-, Glas-, Keramik- und/oder Metallgehäuse, zur Aufnahme mindestens eines Sensors (10, 11, 12) der Sensoranordnung (9), mindestens eines Filters der Filteranordnung (13), mindestens eines Ventils (8) der Ventilanordnung (7) und/oder mindestens eines Leitungsabschnitts (17) des Fluidleitungsnetzwerks (16) aufweist, vorzugsweise,
dass mindestens ein Sensor (10, 11, 12), Ventil (8) und/oder Leitungsabschnitt (17) innerhalb des Gehäuses (34) und/oder mindestens ein Filter (6, 14, 15), insbesondere lösbar, außerhalb des Gehäuses (34) angeordnet oder anordenbar ist.

10. Anordnung nach einem der Ansprüche 8 oder 9, **dadurch gekennzeichnet, dass** ein Montagemodul (33) frei von Filtern ist und/oder eine Elektronik mit mindestens einer elektrischen Platine (35), insbesondere mit einer integrierten Schaltung, zum Empfang von Sensordaten und/oder zur Steuerung mindestens eines Ventils (8) und/oder zur Steuerung einer Pumpe, insbesondere Hydraulikpumpe und/oder Pneumatikpumpe (24), aufweist, und/oder,
dass ein Montagemodul (33) eine Pumpe, insbesondere Hydraulikpumpe und/oder Pneumatikpumpe (24), aufweist, vorzugsweise,
dass die Elektronik und/oder elektrische Platine (35) und/oder die Pumpe in oder an dem Gehäuse (34) des Montagemoduls (33) angeordnet ist.

11. Anordnung nach einem der Ansprüche 8 bis 10, **dadurch gekennzeichnet, dass** jedem Montagemodul (33), an dem ein Filter (6, 14, 15) anordenbar oder angeordnet ist, insbesondere jedem Gehäuse (34), an oder in dem ein Filter (6, 14, 15) befestigbar oder befestigt ist, genau ein Filter (6, 14, 15) zugeordnet ist.

12. Anordnung nach einem der Ansprüche 8 bis 11, **dadurch gekennzeichnet, dass** das jeweilige Montagemodul (33), insbesondere das Gehäuse (34), mindestens eine pneumatische Schnittstelle (36), mindestens eine hydraulische Schnittstelle (37) und/oder mindestens eine elektrische Schnittstelle (38) aufweist, vorzugsweise,
dass jeweils zwei Montagemodule (33), insbesondere jeweils zwei Gehäuse (34), unmittelbar miteinander mechanisch verbindbar oder verbunden sind und insbesondere vertikal übereinander stapelbar oder gestapelt sind.

13. Anordnung nach einem der Ansprüche 8 bis 12, **dadurch gekennzeichnet, dass** durch ein mechanisches Verbinden, insbesondere unmittelbares mechanisches Verbinden, zweier Montagemodule (33) miteinander zwischen den Montagemodulen (33) mindestens eine pneumatische Verbindung (39), mindestens eine hydraulische Verbindung (40) und/oder mindestens eine elektrische Verbindung (41) über jeweils zwei zueinander korrespondierende der Schnittstellen (36, 37, 38) gebildet wird.

14. Anordnung nach einem der vorhergehenden Ansprüche, **dadurch gekennzeichnet, dass** das Filtrationsversuchssystem (1) einen Träger (42) aufweist und dass nur ein Vorlagebehälter (3), insbesondere nur der Vorlagebehälter (3) für das Testmedium (M) und/oder nur der Vorlagebehälter (3) für Benetzungs- (B) und/oder Spülflüssigkeit, an dem Träger (42) fixierbar oder fixiert ist und/oder nur ein oder mehrere Sensoren (10, 11, 12) der Sensoranordnung (9) jeweils an dem gemeinsamen Träger (42) fixierbar oder fixiert sind und/oder nur ein oder mehrere Montagemodule (33) jeweils an dem gemeinsamen Träger (42) fixierbar oder fixiert sind, vorzugsweise,
dass der Träger (42) ein Stativ (43) mit einem, insbesondere höhenverstellbaren, Halter (44) ist, oder, dass der Träger (42) eine, insbesondere an einem Stativ (43) befestigte, Montageplatte (45) ist, an der ein oder mehrere Sensoren (10, 11, 12) der Sensoranordnung (9), der Vorlagebehälter (3) und/oder ein oder mehrere Montagemodule (33) jeweils, insbesondere lösbar, fixierbar oder fixiert sind, vorzugsweise,
dass die Fixierung des jeweiligen Sensors (10, 11, 12), Vorlagebehälters (3) und/oder Montagemoduls (33) an der Montageplatte (45) magnetisch, formschlüssig und/oder kraftschlüssig erfolgt.

15. Anordnung nach Anspruch 14, **dadurch gekennzeichnet, dass** im montierten Zustand zwischen zwei an der Montageplatte (45) fixierten Sensoren (10, 11, 12) jeweils ein Filter (6, 14, 15) angeordnet ist, der nicht selbst an der Montageplatte (45) fixiert ist.

16. Anordnung nach einem der Ansprüche 14 oder 15, **dadurch gekennzeichnet, dass** die Montageplatte (45) Bestandteil eines Gehäuses eines Datenempfangsinstruments (18, 23) ist, insbesondere des Datenempfangsinstruments (18, 23), das eingerichtet ist, als Verarbeitung der Sensordaten, ein Bündeln der Sensordaten zu Datenpaketen und Versenden der Datenpakete und/oder ein Umwandeln von analogen Sensordaten in digitale Sensordaten und/oder, insbesondere vor dem Umwandeln, ein Verstärken der analogen Sensorsignale durchzuführen.

17. Anordnung nach einem der Ansprüche 14 bis 16, **dadurch gekennzeichnet, dass** der jeweilige Träger (42) und/oder das jeweilige Stativ (43) mechanisch mit dem Gehäuse einer Waage (20) der Wägeanordnung (19) verbunden ist.

18. Verfahren für den Betrieb eines bioprozesstechnischen, insbesondere biopharmazeutischen, Filtrationsversuchssystems zum Filtrieren eines flüssigen Testmediums (M) im Rahmen eines Filtrationsversuchs in einer Filtrationsversuchsstrecke (2) des Filtrationsversuchssystems (1), die von einem Vorlagebehälter (3) zur Aufnahme des zu filtrierenden Testmediums (M) zu einem Fluidauslass (4) für das filtrierte Testmedium (F) führt, wobei mittels des Filtrationsversuchssystems (1) im Rahmen des Filtrationsversuchs Sensordaten als Versuchsdaten zu mindestens einem Filter (6) ermittelt werden, auf deren Basis der Filter eines Zielsystems nach vorbestimmten Skalierungskriterien ausgewählt und/oder dimensioniert wird,
**dadurch gekennzeichnet,**
**dass** das Filtrationsversuchssystem (1) zumindest teilweise programmier- und/oder schaltungstechnisch vorkonfektioniert ist und mindestens ein Datenempfangsinstrument (18, 21, 22, 23) betreffend den Empfang von Sensordaten der Sensoranordnung (9) programmier- und/oder schaltungstechnisch vorkonfektioniert ist, dass die empfangenen Sensordaten mittels des Datenempfangsgeräts als Versuchsdaten an ein Datenverarbeitungs- und/oder -auswertegerät übertragen werden und dass mittels eines Datenverarbeitungs- und/oder - auswertegeräts nach vorbestimmten Skalierungskriterien zu dem jeweiligen Filter (6, 14) der Filtrationsversuchsstrecke (2) ein entsprechender Filter eines Zielsystems ausgewählt und/oder dimensioniert wird.

## Claims

1. Arrangement comprising a bioprocessing, in particular biopharmaceutical, filtration experiment system for filtering a liquid test medium (M) as part of a filtration experiment in a filtration experiment section (2) of the filtration experiment system (1), which filtration experiment section runs from a receptacle (3) for holding the test medium (M) to be filtered to a fluid outlet (4) for the filtered test medium (F), wherein the filtration experiment system (1) is designed to ascertain, as part of the filtration experiment, sensor data as experiment data for at least one filter (6), on the basis of which the filter of a target system is selected and/or dimensioned according to predetermined scaling criteria,
**characterized in that**
the filtration experiment system (1) is preassembled on an at least partially programming-related and/or circuit-related basis and comprises at least one data receiving instrument (18, 21, 22, 23) for receiving sensor data from the sensor arrangement (9), which data receiving instrument is preassembled on a programming-related and/or circuit-related basis concerning the reception and/or capture and/or processing of sensor data from the sensor arrangement (9) and thus is provided in a manner specific to the experiment, **in that** the data receiving instrument (18, 21, 22, 23) is designed to record the sensor data, and **in that** the arrangement comprises a data processing and/or evaluation device which is designed to select and/or dimension a suitable filter of a target system according to predetermined scaling criteria for the respective filter (6, 14) of the filtration experiment section (2).

2. Arrangement according to claim 1, **characterized in that** the filtration experiment system (1), in particular the filtration experiment section (2), comprises a valve arrangement (7) containing one or more valves (8), a sensor arrangement (9) containing one or more sensors (10, 11, 12), in particular one or more pressure sensors (11), volume flow sensors (12) and/or temperature sensors, a filter arrangement (13) containing one or more filters (6, 14, 15), in particular one or more liquid filters (14) and/or air filters (15), and/or a fluid line network (16) containing multiple line sections (17) via which the test medium (M) reaches the respective filter (6, 14, 15), and/or **in that** the filtration experiment system (1) comprises a weighing arrangement (19) containing a balance (20).

3. Arrangement according to claim 1 or 2, **characterized in that** the processing of the sensor data includes comparing sensor data with at least one setpoint value or setpoint value range and/or bundling sensor data to form data packets and sending the data packets and/or converting analog sensor data into digital sensor data and/or, in particular prior to the conversion, amplifying the analog sensor signals.

4. Arrangement according to any one of the preceding claims, **characterized in that** the filtration experiment system (1) comprises at least one pump, in particular a hydraulic pump and/or pneumatic pump (24), and/or at least one pneumatic pressure regulator (R), and **in that** at least one data receiving instrument (18, 22) is preassembled on a programming-related and/or circuit-related basis concerning the control of the pump and/or of the pneumatic pressure regulator (R), preferably **in that** the pump and/or the pneumatic pressure regulator (R) is controllable in such a way that it is possible to produce a predefined, constant or varying, pressure or volume flow of the test medium (M) in the filtration experiment section (2) and/or a defined, constant or varying, pressure or volume flow of a wetting liquid (B), in particular in the case of an automatic filter wetting process, in the filtration experiment section (2) and/or a defined, constant or varying, pressure or volume flow of the compressed air and/or of a flushing liquid, in particular in the case of an automatic draining and/or flushing process, in the filtration experiment section (2).

5. Arrangement according to any one of the preceding claims, **characterized in that** at least one data receiving instrument (18, 22) is preassembled on a programming-related and/or circuit-related basis concerning the control of at least one valve (8) of the valve arrangement (7), in particular concerning the control for a filter wetting process, for a filter venting process, for a filtration experiment with the test medium (M) and/or for a draining and/or flushing process.

6. Arrangement according to any one of the preceding claims, **characterized in that** the at least one data receiving instrument (18, 21, 22, 23) comprises a power supply (28), at least one data interface (29), a memory (30) for storing raw sensor data and/or processed sensor data, a pneumatic inlet (31), at least one pneumatic outlet (32), a pneumatic pressure regulator (R) and/or at least one pneumatic pump (24), preferably
**in that** the respective data receiving instrument (18, 21, 22, 23) is free of hydraulic connections and is in particular arrangeable or arranged at a physical distance from the filtration experiment section (2).

7. Arrangement according to any one of the preceding claims, **characterized in that** the filtration experiment system (1), in particular the filtration experiment section (2) and/or the sensor arrangement (9), is preassembled on a sensor-related basis concerning the measurement principle, the specifications and/or the installation position of at least one sensor (10, 11, 12) of the sensor arrangement (9), and/or
**in that** the filtration experiment system (1), in particular the filtration experiment section (2) and/or the filter arrangement (13), is preassembled on a fluidics-related basis concerning the operating principle, the specifications and/or the installation position of at least one filter (6, 14, 15) of the filter arrangement (13), and/or
**in that** the filtration experiment system (1), in particular the filtration experiment section (2) and/or the valve arrangement (7), is preassembled on a fluidics-related basis concerning the type of actuation, the specifications and/or the installation position of at least one valve (8) of the valve arrangement (7), and/or
**in that** the filtration experiment system (1), in particular the filtration experiment section (2) and/or the fluid line network (16), is preassembled on a fluidics-related basis concerning the specifications and/or the installation position of at least one line section (17) of the fluid line network (16).

8. Arrangement according to any one of the preceding claims, **characterized in that** at least one sensor (10, 11, 12) of the sensor arrangement (9), at least one filter (6, 14, 15) of the filter arrangement (13), at least one valve (8) of the valve arrangement (7) and/or at least one receptacle (3) together with at least one line section (17) of the fluid line network (16) form an assembly module (33) preassembled on a fluidics-related and/or sensor-related basis, the assembly module (33) or multiple such assembly modules (33) in particular forming the filtration experiment section (2), preferably
**in that** the respective assembly module (33) comprises the receptacle (3) for the test medium (M) and/or a receptacle (3) for wetting liquid (B) and/or flushing liquid, and/or
**in that** at least one assembly module (33) comprises a fluid outlet (4) for discharging the filtered test medium (F) into a collecting container (5) of the filtration experiment system (1).

9. Arrangement according to claim 8, **characterized in that** the respective assembly module (33) comprises a housing (34), in particular a plastic, resin, glass, ceramic and/or metal housing, for holding at least one sensor (10, 11, 12) of the sensor arrangement (9), at least one filter of the filter arrangement (13), at least one valve (8) of the valve arrangement (7) and/or at least one line section (17) of the fluid line network (16), preferably
**in that** at least one sensor (10, 11, 12), valve (8) and/or line section (17) is arranged or arrangeable inside the housing (34) and/or at least one filter (6, 14, 15) is arranged or arrangeable, in particular detachably, outside the housing (34).

10. Arrangement according to any one of claims 8 or 9, **characterized in that** an assembly module (33) is free of filters and/or comprises electronics having at least one electrical circuit board (35), in particular having an integrated circuit, for receiving sensor data and/or for controlling at least one valve (8) and/or for controlling a pump, in particular a hydraulic pump and/or pneumatic pump (24), and/or
**in that** an assembly module (33) comprises a pump, in particular a hydraulic pump and/or pneumatic pump (24), preferably
**in that** the electronics and/or electrical circuit board (35) and/or the pump is arranged in or on the housing (34) of the assembly module (33).

11. Arrangement according to any one of claims 8 to 10, **characterized in that** every assembly module (33) on which a filter (6, 14, 15) is arrangeable or arranged, in particular every housing (34) to or in which a filter (6, 14, 15) is attachable or attached, has precisely one associated filter (6, 14, 15).

12. Arrangement according to any one of claims 8 to 11, **characterized in that** the respective assembly module (33), in particular the housing (34), comprises at least one pneumatic interface (36), at least one hydraulic interface (37) and/or at least one electrical interface (38), preferably
**in that** in each case two assembly modules (33), in particular in each case two housings (34), are directly mechanically connectable or connected to one another and are in particular vertically stackable or stacked above one another.

13. Arrangement according to any one of claims 8 to 12, **characterized in that** a mechanical connection, in particular direct mechanical connection, of two assembly modules (33) to one another forms at least one pneumatic connection (39), at least one hydraulic connection (40) and/or at least one electrical connection (41) between the assembly modules (33) by way of in each case two mutually corresponding interfaces (36, 37, 38) .

14. Arrangement according to any one of the preceding claims, **characterized in that** the filtration experiment system (1) has a support (42), and **in that** only one receptacle (3), in particular only the receptacle (3) for the test medium (M) and/or only the receptacle (3) for wetting liquid (B) and/or flushing liquid, is fixable or fixed to the support (42) and/or only one or more sensors (10, 11, 12) of the sensor arrangement (9) are each fixable or fixed to the common support (42) and/or only one or more assembly modules (33) are each fixable or fixed to the common support (42), preferably
**in that** the support (42) is a stand (43) having a, in particular adjustable-height, holder (44), or **in that** the support (42) is a mounting plate (45), in particular attached to a stand (43), to which one or more sensors (10, 11, 12) of the sensor arrangement (9), the receptacle (3) and/or one or more assembly modules (33) are each, in particular detachably, fixable or fixed, preferably
**in that** the respective sensor (10, 11, 12), receptacle (3) and/or assembly module (33) is fixed to the mounting plate (45) magnetically, with a form-fit and/or with a force-fit.

15. Arrangement according to claim 14, **characterized in that**, in the mounted state, a filter (6, 14, 15) is arranged between each two sensors (10, 11, 12) fixed to the mounting plate (45), which filter is itself not fixed to the mounting plate (45).

16. Arrangement according to any one of claims 14 or 15, **characterized in that** the mounting plate (45) is part of a housing of a data receiving instrument (18, 23), in particular the data receiving instrument (18, 23) that is designed to carry out bundling of the sensor data to form data packets and sending of the data packets and/or conversion of analog sensor data into digital sensor data and/or, in particular prior to the conversion, amplification of the analog sensor signals as processing of the sensor data.

17. Arrangement according to any one of claims 14 to 16, **characterized in that** the respective support (42) and/or the respective stand (43) is mechanically connected to the housing of a balance (20) of the weighing arrangement (19).

18. Method for operating a bioprocessing, in particular biopharmaceutical, filtration experiment system for filtering a liquid test medium (M) as part of a filtration experiment in a filtration experiment section (2) of the filtration experiment system (1), which filtration experiment section runs from a receptacle (3) for holding the test medium (M) to be filtered to a fluid outlet (4) for the filtered test medium (F), wherein, by means of the filtration experiment system (1), as part of the filtration experiment, sensor data are ascertained as experiment data for at least one filter (6), on the basis of which the filter of a target system is selected and/or dimensioned according to predetermined scaling criteria,
**characterized in that**
the filtration experiment system (1) is preassembled on an at least partially programming-related and/or circuit-related basis, and at least one data receiving instrument (18, 21, 22, 23) is preassembled on a programming-related and/or circuit-related basis concerning the reception of sensor data from the sensor arrangement (9), **in that**, by means of the data receiving instrument, the received sensor data are transmitted as experiment data to a data processing and/or evaluation device, and **in that**, by means of a data processing and/or evaluation device, a suitable filter of a target system is selected and/or dimensioned according to predetermined scaling criteria for the respective filter (6, 14) of the filtration experiment section (2).

## Revendications

1. Ensemble présentant un système d'essai de filtration en technique de bioprocédés, en particulier biopharmaceutique, pour filtrer un milieu de test (M) liquide dans le cadre d'un essai de filtration dans un parcours d'essai de filtration (2) du système d'essai de filtration (1), qui mène d'un récipient d'alimentation (3) pour le logement du milieu de test (M) à filtrer à une sortie de fluide (4) pour le milieu de test (F) filtré, dans lequel le système d'essai de filtration (1) est conçu pour déterminer dans le cadre de l'essai de filtration des données de capteur en tant que données d'essai pour au moins un filtre (6), sur la base desquelles le filtre d'un système cible est choisi et/ou dimensionné selon des critères de mise à l'échelle prédéfinis,
**caractérisé en ce**
**que** le système d'essai de filtration (1) est préassemblé au moins en partie en termes de programmation et/ou de circuits et présente au moins un instrument de réception de données (18, 21, 22, 23) pour la réception de données de capteur de l'ensemble de capteur (9), lequel en ce qui concerne la réception et/ou l'acquisition et/ou le traitement de données de capteur de l'ensemble de capteur (9) est préassemblé en termes de programmation et/ou de circuits et donc fourni de manière spécifique à l'essai, que l'instrument de réception de données (18, 21, 22, 23) est conçu pour enregistrer les données de capteur, et que l'ensemble présente un appareil de traitement et/ou d'évaluation de données, qui est conçu pour choisir et/ou pour dimensionner un filtre correspondant d'un système cible selon des critères de mise à l'échelle prédéfinis pour le filtre (6, 14) respectif du parcours d'essai de filtration (2).

2. Ensemble selon la revendication 1, **caractérisé en ce que** le système d'essai de filtration (1), en particulier le parcours d'essai de filtration (2), présente un ensemble de valve (7) avec une ou plusieurs valves (8), un ensemble de capteur (9) avec un ou plusieurs capteurs (10, 11, 12), en particulier un ou plusieurs capteurs de pression (11), de débit volumique (12) et/ou de température, un ensemble de filtre (13) avec un ou plusieurs filtres (6, 14, 15), en particulier un ou plusieurs filtres à liquide (14) et/ou à air (15), et/ou un réseau de conduite de fluide (16) avec plusieurs sections de conduite (17), par l'intermédiaire desquelles le milieu de test (M) parvient au filtre (6, 14, 15) respectif, et/ou que le système d'essai de filtration (1) présente un ensemble de pesage (19) avec une balance (20).

3. Ensemble selon la revendication 1 ou 2, **caractérisé en ce que** le traitement des données de capteur comprend une comparaison de données de capteur à au moins une valeur de consigne ou plage de valeurs de consigne et/ou un regroupement de données de capteur en paquets de données et un envoi des paquets de données et/ou une conversion de données analogiques de capteur en données numériques de capteur et/ou en particulier, avant la conversion, une amplification des signaux de capteur analogiques.

4. Ensemble selon l'une quelconque des revendications précédentes, **caractérisé en ce que** le système d'essai de filtration (1) présente au moins une pompe, en particulier pompe hydraulique et/ou pompe pneumatique (24), et/ou au moins un régulateur de pression pneumatique (R) et qu'au moins un instrument de réception de données (18, 22) en ce qui concerne la commande de la pompe et/ou du régulateur de pression pneumatique (R) est préassemblé en termes de programmation et/ou de circuits, de préférence, que la pompe et/ou le régulateur de pression pneumatique (R) peut être commandé(e) de telle sorte qu'un(e) pression ou débit volumique prédéfini(e), constant(e) ou variable du milieu de test (M) dans le parcours d'essai de filtration (2) et/ou un(e) pression ou débit volumique défini(e), constant(e) ou variable d'un liquide de mouillage (B), en particulier lors d'un processus d'humidification de filtre automatique, dans le parcours d'essai de filtration (2) et/ou un(e) pression ou débit volumique défini(e), constant(e) ou variable de l'air comprimé et/ou d'un liquide de rinçage, en particulier lors d'un processus de vidage et/ou de rinçage automatique, dans le parcours d'essai de filtration (2) peut être produit.

5. Ensemble selon l'une quelconque des revendications précédentes, **caractérisé en ce qu'**au moins un instrument de réception de données (18, 22) en ce qui concerne la commande au moins d'une valve (8) de l'ensemble de valve (7) est préassemblé en termes de programmation et/ou de circuits, en particulier en ce qui concerne la commande lors d'un processus d'humidification de filtre, lors d'un processus de ventilation de filtre, lors d'un essai de filtration avec le milieu de test (M) et/ou lors d'un processus de vidage et/ou de rinçage.

6. Ensemble selon l'une quelconque des revendications précédentes, **caractérisé en ce que** l'au moins un instrument de réception de données (18, 21, 22, 23) présente une alimentation en tension (28), au moins une interface de données (29), une mémoire (30) pour le stockage de données brutes de capteur et/ou de données de capteur traitées, une entrée pneumatique (31), au moins une sortie pneumatique (32), un régulateur de pression pneumatique (R) et/ou au moins une pompe pneumatique (24), de préférence,
que l'instrument de réception de données (18, 21, 22, 23) respectif est dépourvu de raccords hydrauliques et en particulier peut être disposé ou est disposé de manière espacée dans l'espace du parcours d'essai de filtration (2).

7. Ensemble selon l'une quelconque des revendications précédentes, **caractérisé en ce que** le système d'essai de filtration (1), en particulier le parcours d'essai de filtration (2) et/ou l'ensemble de capteur (9), en ce qui concerne le principe de mesure, les spécifications et/ou la position de montage au moins d'un capteur (10, 11, 12) de l'ensemble de capteur (9), est préassemblé en termes de capteurs et/ou,
que le système d'essai de filtration (1), en particulier le parcours d'essai de filtration (2) et/ou l'ensemble de filtre (13), en ce qui concerne le principe de fonctionnement, les spécifications et/ou la position de montage au moins d'un filtre (6, 14, 15) de l'ensemble de filtre (13), est préassemblé en termes fluidiques, et/ou,
que le système d'essai de filtration (1), en particulier le parcours d'essai de filtration (2) et/ou l'ensemble de valve (7), en ce qui concerne le type d'actionnement, les spécifications et/ou la position de montage au moins d'une valve (8) de l'ensemble de valve (7), est préassemblé en termes fluidiques, et/ou,
que le système d'essai de filtration (1), en particulier le parcours d'essai de filtration (2) et/ou le réseau de conduite de fluide (16), en ce qui concerne les spécifications et/ou la position de montage au moins d'une partie de conduite (17) du réseau de conduite de fluide (16), est préassemblé en termes fluidiques.

8. Ensemble selon l'une quelconque des revendications précédentes, **caractérisé en ce qu'**au moins un capteur (10, 11, 12) de l'ensemble de capteur (9), au moins un filtre (6, 14, 15) de l'ensemble de filtre (13), au moins une valve (8) de l'ensemble de valve (7) et/ou au moins un récipient d'alimentation (3) forment conjointement avec au moins une partie de conduite (17) du réseau de conduite de fluide (16) un module de montage (33) préassemblé en termes fluidiques et/ou de capteurs, dans lequel en particulier le module de montage (33) ou plusieurs tels modules de montage (33) forment le parcours d'essai de filtration (2), de préférence,
que le module de montage (33) respectif présente le récipient d'alimentation (3) pour le milieu de test (M) et/ou un récipient d'alimentation (3) pour un liquide de mouillage (B) et/ou de rinçage, et/ou,
qu'au moins un module de montage (33) présente une sortie de fluide (4) pour évacuer le milieu de test (F) filtré dans un récipient collecteur (5) du système d'essai de filtration (1).

9. Ensemble selon la revendication 8, **caractérisé en ce que** le module de montage (33) respectif présente un boîtier (34), en particulier boîtier en plastique, résine, verre, céramique et/ou métal, pour le logement au moins d'un capteur (10, 11, 12) de l'ensemble de capteur (9), au moins d'un filtre de l'ensemble de filtre (13), au moins d'une valve (8) de l'ensemble de valve (7) et/ou au moins d'une partie de conduite (17) du réseau de conduite de fluide (16), de préférence,
qu'au moins un(e) capteur (10, 11, 12), valve (8) et/ou partie de conduite (17) est disposé(e) ou peut être disposé(e) à l'intérieur du boîtier (34) et/ou au moins un filtre (6, 14, 15), en particulier de manière détachable, à l'extérieur du boîtier (34).

10. Ensemble selon l'une quelconque des revendications 8 ou 9, **caractérisé en ce qu'**un module de montage (33) est dépourvu de filtres et/ou présente une électronique avec au moins une carte électrique (35), en particulier avec un circuit intégré, pour la réception de données de capteur et/ou pour la commande au moins d'une valve (8) et/ou pour la commande d'une pompe, en particulier pompe hydraulique et/ou pompe pneumatique (24), et/ou,
qu'un module de montage (33) présente une pompe, en particulier pompe hydraulique et/ou pompe pneumatique (24), de préférence,
que l'électronique et/ou la carte électrique (35) et/ou la pompe est disposée dans ou sur le boîtier (34) du module de montage (33).

11. Ensemble selon l'une quelconque des revendications 8 à 10, **caractérisé en ce qu'**un seul filtre (6, 14, 15) est associé à chaque module de montage (33), sur lequel un filtre (6, 14, 15) peut être disposé ou est disposé, en particulier à chaque boîtier (34), sur ou dans lequel un filtre (6, 14, 15) peut être fixé ou est fixé.

12. Ensemble selon l'une quelconque des revendications 8 à 11, **caractérisé en ce que** le module de montage (33) respectif, en particulier le boîtier (34), présente au moins une interface pneumatique (36), au moins une interface hydraulique (37) et/ou au moins une interface électrique (38), de préférence,
que respectivement deux modules de montage (33), en particulier respectivement deux boîtiers (34), peuvent être reliés ou sont reliés mécaniquement directement l'un à l'autre et en particulier peuvent être empilés ou sont empilés verticalement l'un au-dessus de l'autre.

13. Ensemble selon l'une quelconque des revendications 8 à 12, **caractérisé en ce qu'**au moins une liaison pneumatique (39), au moins une liaison hydraulique (40) et/ou au moins une liaison électrique (41) est formée par l'intermédiaire de respectivement deux correspondant l'une à l'autre des interfaces (36, 37, 38) par un assemblage mécanique, en particulier assemblage mécanique direct, de deux modules de montage (33) l'un à l'autre entre les modules de montage (33).

14. Ensemble selon l'une quelconque des revendications précédentes, **caractérisé en ce que** le système d'essai de filtration (1) présente un support (42) et que seulement un récipient d'alimentation (3), en particulier seulement le récipient d'alimentation (3) pour le milieu de test (M) et/ou seulement le récipient d'alimentation (3) pour le liquide de mouillage (B) et/ou de rinçage, peut être fixé ou est fixé sur le support (42) et/ou seulement un ou plusieurs capteurs (10, 11, 12) de l'ensemble de capteur (9) peuvent être fixés ou sont fixés respectivement sur le support (42) commun et/ou seulement un ou plusieurs modules de montage (33) peuvent être fixés ou sont fixés respectivement sur le support (42) commun, de préférence,
que le support (42) est un pied (43) avec un élément de retenue (44), en particulier réglable en hauteur, ou que le support (42) est une plaque de montage (45), en particulier fixée sur un pied (43), sur laquelle un ou plusieurs capteurs (10, 11, 12) de l'ensemble de capteur (9), le récipient d'alimentation (3) et/ou un ou plusieurs modules de montage (33) peuvent être fixés ou sont fixés respectivement, en particulier de manière détachable,
de préférence,
que la fixation du capteur (10, 11, 12), récipient d'alimentation (3) et/ou module de montage (33) respectif sur la plaque de montage (45) s'effectue magnétiquement, par coopération de formes et/ou à force.

15. Ensemble selon la revendication 14, **caractérisé en ce que** dans l'état monté respectivement un filtre (6, 14, 15), qui n'est pas fixé lui-même sur la plaque de montage (45), est disposé entre deux capteurs (10, 11, 12) fixés sur la plaque de montage (45).

16. Ensemble selon l'une quelconque des revendications 14 ou 15, **caractérisé en ce que** la plaque de montage (45) fait partie d'un boîtier d'un instrument de réception de données (18, 23), en particulier de l'instrument de réception de données (18, 23), qui est conçu, en tant que traitement des données de capteur, pour mettre en œuvre un regroupement des données de capteur en paquets de données et un envoi des paquets de données et/ou une conversion de données analogiques de capteur en données numériques de capteur et/ou, en particulier avant la conversion, une amplification des signaux de capteur analogiques.

17. Ensemble selon l'une quelconque des revendications 14 à 16, **caractérisé en ce que** le support (42) respectif et/ou le pied (43) respectif est relié mécaniquement au boîtier d'une balance (20) de l'ensemble de pesage (19).

18. Procédé pour le fonctionnement d'un système d'essai de filtration en technique de bioprocédés, en particulier biopharmaceutique, pour filtrer un milieu de test (M) liquide dans le cadre d'un essai de filtration dans un parcours d'essai de filtration (2) du système d'essai de filtration (1), qui mène d'un récipient d'alimentation (3) pour le logement du milieu de test (M) à filtrer à une sortie de fluide (4) pour le milieu de test (F) filtré, dans lequel au moyen du système d'essai de filtration (1) dans le cadre de l'essai de filtration des données de capteur sont déterminées en tant que données d'essai pour au moins un filtre (6), sur la base desquelles le filtre d'un système cible est choisi et/ou dimensionné selon des critères de mise à l'échelle prédéfinis,
**caractérisé en ce**
**que** le système d'essai de filtration (1) est préassemblé au moins en partie en termes de programmation et/ou de circuits et au moins un instrument de réception de données (18, 21, 22, 23) en ce qui concerne la réception de données de capteur de l'ensemble de capteur (9) est préassemblé en termes de programmation et/ou de circuits, que les données de capteur reçues sont transmises au moyen de l'appareil de réception de données en tant que données d'essai à un appareil de traitement et/ou d'évaluation de données et qu'un filtre correspondant d'un système cible est choisi et/ou dimensionné au moyen d'un appareil de traitement de données et/ou d'évaluation selon des critères de mise à l'échelle prédéfinis pour le filtre (6, 14) respectif du parcours d'essai de filtration (2).
